# EUROPÄISCHE PATENTSCHRIFT

(11) **EP 2 995 453 B1**
(45) Veröffentlichungstag und Bekanntmachung des Hinweises auf die Patenterteilung: **05.12.2018**
(21) Anmeldenummer: 15175442.1
(22) Anmeldetag: 06.07.2015
(51) Int. Cl.: B41F 15/08, B41F 15/30, B41F 17/00, B41F 17/18, B41F 17/20, B41J 3/407, B65B 21/00, B65B 35/16, B65B 35/26, B65B 61/02, B65G 47/84, B65B 35/58, B65G 47/86

(54) **TRANSPORTVORRICHTUNG FÜR OBJEKTE, WELCHE IN EINER BEARBEITUNGSMASCHINE BEARBEITET WERDEN**
TRANSPORT DEVICE FOR OBJECTS PROCESSED IN A PROCESSING MACHINE
DISPOSITIF DE TRANSPORT POUR DES OBJETS USINES DANS UNE MACHINE D'USINAGE

(30) Priorität: 12.09.2014 DE 102014218313
(43) Veröffentlichungstag der Anmeldung: 16.03.2016
(73) Patentinhaber: KBA-Kammann GmbH, 32549 Bad Oeynhausen (DE)
(72) Erfinder: Jeretzky, Gerald, 32609 Hüllhorst (DE)
(74) Vertreter: Koenig & Bauer AG

(56) Entgegenhaltungen:
- EP-A1- 2 363 288
- EP-A1- 2 754 556
- EP-A2- 0 314 973
- WO-A1-2011/121222
- DE-A1- 3 743 676
- DE-A1- 3 936 157
- DE-A1- 3 940 779
- DE-U1- 8 629 557
- US-A- 4 671 093

## Beschreibung

Die Erfindung betrifft eine Transportvorrichtung für in einer Bearbeitungsmaschine zu bearbeitende und dort bearbeitete Objekte gemäß dem Oberbegriff des Anspruches 1.
Durch die WO 2011/121222 A1 ist eine Transportvorrichtung an einer ein Druckwerk aufweisenden Bearbeitungsmaschine mit einer ersten Fördereinrichtung und einer zweiten Fördereinrichtung bekannt, wobei die erste Fördereinrichtung zu bedruckende Artikel aus Glas oder aus einem Kunststoff zur zweiten Fördereinrichtung bewegt und an einer Ladestation an die zweite Fördereinrichtung übergibt, wobei die zweite Fördereinrichtung z. B. als ein Drehtisch oder als ein Förderband ausgebildet ist und die zu bedruckenden Artikel kontinuierlich zu einem in einem Siebdruckverfahren druckenden Druckwerk transportiert und anschließend an einer Entladestation wieder abgibt.
Durch die DE 10 2006 023 349 A1 ist eine Vorrichtung zum Dekorieren von Objekten bekannt, mit zumindest zwei, jeweils von einer Antriebseinrichtung bewegte Transportschlitten, an welchen jeweils eine Halterung angebracht ist, die zum Tragen von zumindest einem Objekt ausgebildet ist, und mit zumindest einer Dekorierstation, wobei die Halterung wenigstens eines Transportschlittens senkrecht zur Bewegungsrichtung des Transportschlittens an diesem bewegbar befestigt ist und die zumindest zwei Transportschlitten wenigstens abschnittsweise auf voneinander getrennten Schlittenbahnen geführt sind.
Durch die DE 10 2004 012 078 A1 ist eine Vorrichtung zum Dekorieren von Objekten bekannt, die von Objektträgern getragen entlang einer Transportbahn durch die Behandlungsstationen der Vorrichtung transportiert werden, welche eine Eingabestation, in welcher die zu bedruckenden Objekte in die Objektträger eingelegt werden, eine Entnahmestation, in welcher die bedruckten Objekte aus den Objektträgern herausgenommen werden, und in einem Abstand von der Transportbahn wenigstens eine Vereinzelungsstation, in welcher die gestapelten zu bedruckenden Objekte einem Magazin einzeln entnommen werden, und wenigstens eine Sammelstation, welcher die bedruckten Objekte zugeführt werden, und wenigstens ein Transportelement aufweist, welches die Objekte in Richtung auf die Eingabestation bzw. die Sammelstation, transportiert, wobei in der Vereinzelungsstation wenigstens eine hin- und herbewegbare erste Hubeinrichtung angeordnet ist, welche die Objekte einzeln dem Stapel entnimmt, und eine die einzelnen Objekte von der ersten Hubeinrichtung übernehmende erste Transporteinrichtung vorgesehen ist, welche die Objekte in Richtung auf die Eingabestation transportiert, und in der Entnahmestation oberhalb des jeweils in derselben befindlichen Objektträgers wenigstens eine hin- und herbewegbare zweite Hubeinrichtung angeordnet und ferner eine zweite Transporteinrichtung vorhanden ist, welche die von der zweiten Hubeinrichtung den Objektträgern entnommenen Objekte übernimmt und in Richtung auf die wenigstens eine Sammelstation transportiert, wobei vorzugsweise die jeweilige wenigstens eine Hubeinrichtung mit wenigstens einem an eine Unterdruckquelle anschließbaren Saugkopf versehen ist, der mit dem Objekt in Berührung bringbar ist.

Durch die DE 39 40 779 A1 ist eine Siebdruckmaschine zum Bedrucken von im Querschnitt runden oder ovalen Gegenständen bekannt, mit einem im oberen Bereich eines Maschinengestells verfahrbar angebrachten Sieb, einem über dem Sieb angeordneten, absenkbaren Rakel, einem Zubringförderer und einem Austragförderer zum Transportieren von zu bedruckenden Gegenständen und eine beweglich unterhalb des Siebes angeordneten Halterung zur Aufnahme der Gegenstände beim Druckvorgang, wobei die Halterung eine im eine waagerechte Achse drehbare Trommel zur sternförmigen Aufnahme einer Anzahl von zu bedruckenden, mit den Achsen parallel zur Trommelachse liegenden Gegenständen umfasst, und wobei die Gegenstände von beiden Stirnseiten her durch Haltebacken gehalten sind, die insgesamt synchron in Bezug auf die Trommel um die Längsachsen der Gegenstände drehbar sind.

Die DE 39 36 157 A1 betrifft ein Siebdruckverfahren zum Bedrucken von Objekten mit wenigstens einem Abschnitt, der eine nicht kreisrunde Querschnittsform aufweist, unter Verwendung einer Vorrichtung mit wenigstens einer Halterung für das Objekt, die um eine nicht im Objektmittelpunkt liegende Achse schwenkbar angeordnet ist, einer Siebdruckschablone und einer dieser gegenüber relativ verschiebbaren Rakel, wobei die Halterung für das Objekt in eine erste Position gebracht wird und das zu bedruckende Objekt ebenfalls in eine der Position der Halterung entsprechende Position gebracht wird derart, dass die längere Querschnittsachse des zu bedruckenden Abschnitts des Objektes im Wesentlichen horizontal verläuft, und das Objekt in dieser Position von der Halterung aufgenommen wird, worauf Halterung und Objekt eine erste Schwenkbewegung ausführen, wodurch Halterung und Objekt in eine Anfangsposition gebracht werden, in welcher eine zweite Schwenkbewegung beginnt, die der ersten Schwenkbewegung entgegengerichtet ist, wobei zumindest während eines Teilabschnittes dieser zweiten Schwenkbewegung das Bedrucken des Objektes erfolgt und Halterung und Objekt nach Erreichen ihrer Endposition am Ende der zweiten Schwenkbewegung eine dritte Schwenkbewegung in Richtung der ersten Schwenkbewegung ausführen derart, dass sich am Ende der dritten Schwenkbewegung Halterung und Objekt wieder in der ersten Position befinden, in welcher dann das bedruckte Objekt von der Halterung entfernt wird.

Durch die DE 86 29 557 U1 ist eine Vorrichtung zum Dekorieren von Objekten bekannt, welche Vorrichtung wenigstens eine erste Station und wenigstens eine zweite Station sowie eine Halterungseinrichtung aufweist, von welcher die Objekte in den Stationen getragen werden, wobei wenigstens eine Station mit wenigstens einer Einrichtung zum Aufbringen einer Dekoration versehen ist und die die Halterungseinrichtung für die Objekte mit paarweise angebrachten sowie parallel zu ihrer Längsachse hin- und herbewegbaren Halterungselementen versehen ist, die paarweise wenigstens zwei Halterungen für die Objekte bilden, die absatzweise von einer Station zu einer in Transportrichtung davon in einem Abstand befindlichen anderen Station vorbewegt werden, wobei für den Transport der Objekte eine Transporteinrichtung vorgesehen ist, die wenigstens einen Grundkörper aufweist, der in einer Ebene, die im Wesentlichen senkrecht zur Längsachse der von den Halterungselementen getragenen Objekte verläuft, schwenkbar angeordnet ist, und mit wenigstens einem Tragelement versehen ist, das vom Grundkörper in Richtung auf die Halterungseinrichtung vorstehend und in der Schwenkbewegung des Grundkörpers an diesem schwenkbar angebracht ist, und der in Transportrichtung der Objekte ausgeführte Hub des Grundkörpers und der in Transportrichtung ausgeführte Hub des Tragelements sich zu einer Wegstrecke ergänzen, um welche das Objekt von einer ersten Station, in welcher es von einer Halterung der Halterungseinrichtung getragen wird, zu einer von der ersten Station in einem Abstand befindlichen zweiten Station vorbewegt wird, in welcher es von einer anderen Haltung getragen wird.

Durch die GB 2 378 436 A ist ein System zum Übertragen von Halterungen für Objekte bekannt, die zwischen einer Fördereinrichtung und einer Maschine, z. B. einem Drucker zum Bedrucken der Objekte, gestapelt und entstapelt werden können. Das System umfasst a) einen mobilen Transfertisch, welcher zwei Positionen aufweist, die jeweils zur Aufnahme einer Halterung für einen Stapel von Objekten geeignet sind und die ausgebildet sind, um eine Reihe von Positionen einzunehmen, b) erste Antriebsmittel, die geeignet sind, den Transfertisch vertikal nach oben und unten zu fahren, und c) eine zweite Antriebseinrichtung, die geeignet ist, den Transfertisch horizontal vor- oder zurückzuziehen und gleichzeitig eine Halterung mit Objekten und eine leere Halterung zu übertragen oder den leeren Transfertisch in eine Position zu ziehen, in der eine neue Halterung erwartet wird.

Durch die EP 2 363 288 A1 ist eine Vorrichtung zum Ausrichten von Gegenständen, insbesondere zur Vorbereitung eines Dekoriervorgangs in einer Druckmaschine, bekannt, umfassend eine Robotereinrichtung mit einem Greifarm zum Ergreifen und nachfolgenden Einsetzen eines Gegenstandes in eine Halteeinrichtung, welche zum Halten des Gegenstandes zumindest eine Stirnseitenaufnahme aufweist, die zur Anlage an einen Stirnseitenabschnitt des in der Halteeinrichtung eingesetzten Gegenstandes ausgebildet ist, sowie ein Mittel zur Einstellung eines ausgerichteten Zustandes des Gegenstandes in der Halteeinrichtung, wobei eine Kameraeinrichtung, welche einen Abschnitt, insbesondere einen Stirnseitenabschnitt des vom Greifarm ergriffenen Gegenstandes bildlich erfasst, eine Bildverarbeitungseinrichtung zur Erfassung der Lage einer vorgegebenen Markierung an dem Abschnitt des Gegenstandes, wobei eine mit der Bildverarbeitungseinrichtung datenverbundene Steuereinrichtung in Abhängigkeit der Lage der erfassten Markierung an dem Abschnitt des Gegenstandes das Mittel zur Einstellung eines ausgerichteten Zustandes des Gegenstandes ansteuert.

Durch die US 4 671 093 A1 ist eine Anordnung zum Transport rohrförmiger Körper bekannt, wobei die rohrförmigen Körper zu einem Drucker transportiert werden, wobei diese Anordnung zumindest folgende Merkmale aufweist: ein rotierbares Mandrelrad, um die zu bedruckenden rohrförmigen Körper unterschiedlichen Stationen des Druckers zuzuführen; mehrere Dorne, um diese rohrförmigen Körper auf dem Mandrelrad zu halten; ein rotierbares Sternenrad mit mehreren Aussparungen, mit denen die rohrförmigen Körper nacheinander jeweils einem freien Dorn des Mandrelrades zugeführt werden, indem die jeweilige Aussparung in eine bestimmte Position gedreht wird, wobei die jeweilige Längsachse der zu transportierenden rohrförmigen Körper auf dem Mandrelrad und auf dem Sternenrad jeweils liegend angeordnet ist.

Der Erfindung liegt die Aufgabe zugrunde, eine Transportvorrichtung für in einer Bearbeitungsmaschine zu bearbeitende und dort bearbeitete Objekte zu schaffen, wobei Objekte schnell und zuverlässig zwischen zwei verschiedenen Fördereinrichtungen ausgetauscht werden können.

Die Aufgabe wird erfindungsgemäß durch die Merkmale des Anspruches 1 gelöst. Die abhängigen Ansprüche bilden vorteilhafte Ausgestaltungen und Weiterbildungen der gefundenen Lösung.

Die mit der Erfindung erzielbaren Vorteile bestehen insbesondere darin, dass in der Bearbeitungsmaschine zu bearbeitende und dort bearbeitete Objekte schnell und zuverlässig zwischen zwei verschiedenen Fördereinrichtungen ausgetauscht werden können. Weitere Vorteile sind aus der folgenden detaillierten Beschreibung ersichtlich.

Ein Ausführungsbeispiel der Erfindung ist in den Zeichnungen dargestellt und wird im Folgenden näher beschrieben.

Es zeigen:
- Fig. 1: eine Bearbeitungsmaschine und eine Transportvorrichtung;
- Fig. 2: einen Ausschnitt der in der Fig. 1 dargestellten Bearbeitungsmaschine und Transportvorrichtung;
- Fig. 3: eine weitere Teilansicht der in den Fig. 1 und 2 dargestellten Bearbeitungsmaschine und Transportvorrichtung;
- Fig. 4: eine Teilansicht einer Übergabeeinrichtung der Transportvorrichtung der Fig. 1 bis 3;
- Fig. 5: eine Draufsicht einer zweiten, nicht erfindungsgemäßen Ausführungsvariante der Transportvorrichtung;
- Fig. 6: eine perspektivische Darstellung der Transportvorrichtung der Fig. 5;
- Fig. 7: einen ersten Betriebszustand der Übergabeeinrichtung der Transportvorrichtung der Fig. 1 bis 4;
- Fig. 8: einen zweiten Betriebszustand der Übergabeeinrichtung der Transportvorrichtung der Fig. 1 bis 4;
- Fig. 9: einen dritten Betriebszustand der Übergabeeinrichtung der Transportvorrichtung der Fig. 1 bis 4;
- Fig. 10: einen vierten Betriebszustand der Übergabeeinrichtung der Transportvorrichtung der Fig. 1 bis 4;
- Fig. 11: einen fünften Betriebszustand der Übergabeeinrichtung der Transportvorrichtung der Fig. 1 bis 4;
- Fig. 12: einen sechsten Betriebszustand der Übergabeeinrichtung der Transportvorrichtung der Fig. 1 bis 4;
- Fig. 13: einen siebten Betriebszustand der Übergabeeinrichtung der Transportvorrichtung der Fig. 1 bis 4;

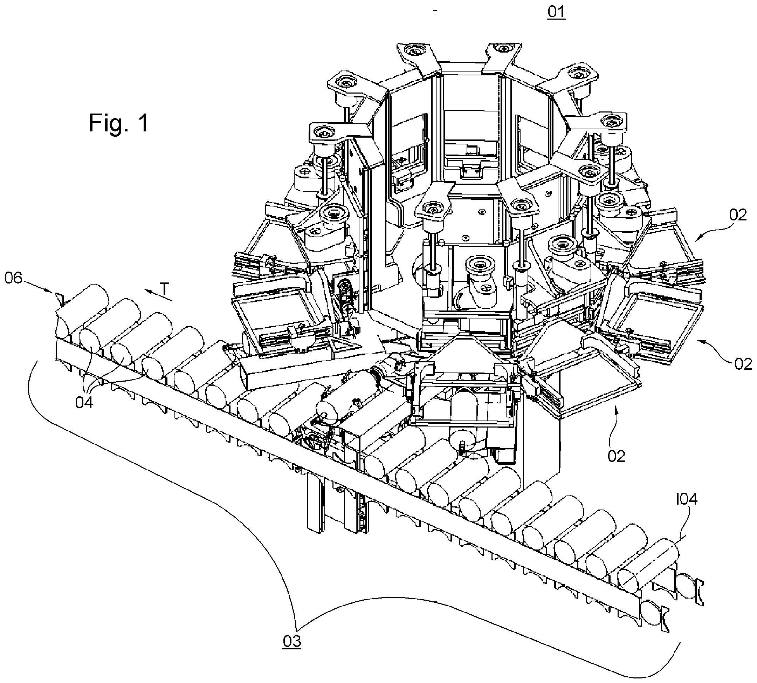

In der Verpackungsindustrie werden in den Figuren 1 bis 13 beispielhaft dargestellte jeweils mindestens eine Bearbeitungsstation 02 aufweisende Bearbeitungsmaschinen 01 verwendet, wobei an der mindestens einen Bearbeitungsstation 02 zu bearbeitende Objekte 04 oder Gegenstände mit einer mindestens zwei separate Fördereinrichtungen 06; 07 aufweisenden Transporteinrichtung 03 vorzugsweise liegend in einer in der Fig. 1 durch einen Bewegungspfeil angedeuteten Transportrichtung T nacheinander zu der mindestens einen Bearbeitungsstation 02 transportiert werden, um an der betreffenden Bearbeitungsstation 02 einzeln bearbeitet zu werden.

Bei den zu bearbeitenden Objekten 04 oder Gegenständen handelt es sich z. B. jeweils um einen vorzugsweise länglichen Hohlkörper aus einem flexiblen oder unflexiblen Werkstoff, insbesondere aus Glas, aus einem Kunststoff oder aus einem Metall. Diese Objekte 04 oder Gegenstände haben z. B. eine zylindrische oder konische Form oder Gestalt, wobei in der betreffenden Bearbeitungsstation 02 insbesondere eine Mantelfläche dieser Objekte 04 oder Gegenstände zu bearbeiten ist. Bei den Objekten 04 oder Gegenständen handelt es sich z. B. um Flaschen, Gläser, Flakons, Dosen, Becher oder Tuben. Unter einem länglichen Hohlkörper soll ein Hohlkörper verstanden werden, bei dem eine seiner Erstreckungen im dreidimensionalen Raum in einer Raumrichtung, d. h. entlang seiner Längsachse, gegenüber dessen jeweiliger Erstreckung in die beiden anderen Raumrichtungen, d. h. gegenüber dessen Breite und/oder Tiefe, signifikant größer ausgebildet ist, z. B. um mehr als 20%, vorzugsweise um mehr als 50%, insbesondere um mehr als 100%.

Die in der betreffenden Bearbeitungsstation 02 vorgenommene Bearbeitung der Objekte 04 oder Gegenstände besteht z. B. in deren Dekorieren oder Bedrucken. Daher ist in der bevorzugten Ausführung mindestens eine der Bearbeitungsstationen 02 als ein Druckwerk ausgebildet, wobei das betreffende Druckwerk vorzugsweise als ein in einem Siebdruckverfahren oder in einem Inkjet-Druckverfahren oder in einem Hochdruckverfahren oder in einem Offsetdruckverfahren druckendes Druckwerk ausgebildet ist. Des Weiteren kann zumindest eine der Bearbeitungsstationen 02 z. B. als eine Druckbildkontrolleinrichtung 18 oder als eine Prägeeinrichtung oder als eine Etikettiereinrichtung oder als eine Lackiereinrichtung oder als eine Einrichtung zur Vorbehandlung der zu bearbeitenden Objekte 04, z. B. als eine Reinigungseinrichtung 21 ausgebildet sein. Das mindestens eine Druckwerk kann auch z. B. als ein Tampondruckwerk oder als ein Transferdruckwerk ausgebildet sein. In einer besonders bevorzugten Ausführung ist die Bearbeitungsmaschine 01 als eine Siebdruckmaschine ausgebildet. Die Bearbeitungsmaschine 01 weist i. d. R. mehrere Bearbeitungsstationen 02 auf, von denen einige z. B. gleichartig ausgebildet sind. Die Bearbeitungsmaschine 01 weist insbesondere mehrere, z. B. 10 oder 12 Druckwerke und zudem mindestens ein Trocknungssystem 17, vorzugsweise mehrere Trocknungssysteme 17 auf, wobei z. B. jeweils einem Druckwerk auch ein Trocknungssystem 17 zugeordnet ist. Die in der Bearbeitungsmaschine 01 angeordneten Druckwerke verdrucken vorzugsweise Druckfarben unterschiedlicher Farbtöne, insbesondere kundenspezifischer Sonderfarben. In den Druckwerken werden z. B. thermoplastische Druckfarben oder UV-härtende Druckfarben verdruckt. Sofern UV-härtende Druckfarben verdruckt werden, sind die Trocknungssysteme 17 vorzugsweise als UV-Trockner ausgebildet. Bei der Verwendung von einer thermoplastischen Druckfarbe in einem in einem Siebdruckverfahren druckenden Druckwerk ist z. B. eine Siebheizung vorgesehen, worauf später noch eingegangen wird. In einer vorteilhaften Ausbildung der Bearbeitungsmaschine 01 ist mindestens eine ihrer Bearbeitungsstationen 02 z. B. als eine Kassetten-Einschubeinrichtung ausgebildet, um einen raschen Austausch der betreffenden Bearbeitungsstation 02 in der Bearbeitungsmaschine 01 und damit eine kurze Rüstzeit zu ermöglichen. Die Bearbeitungsmaschine 01 ist in ihrer bevorzugten Ausführung hinsichtlich der Anzahl und/oder Art ihrer jeweiligen Bearbeitungsstationen 02 frei konfigurierbar ausgebildet.

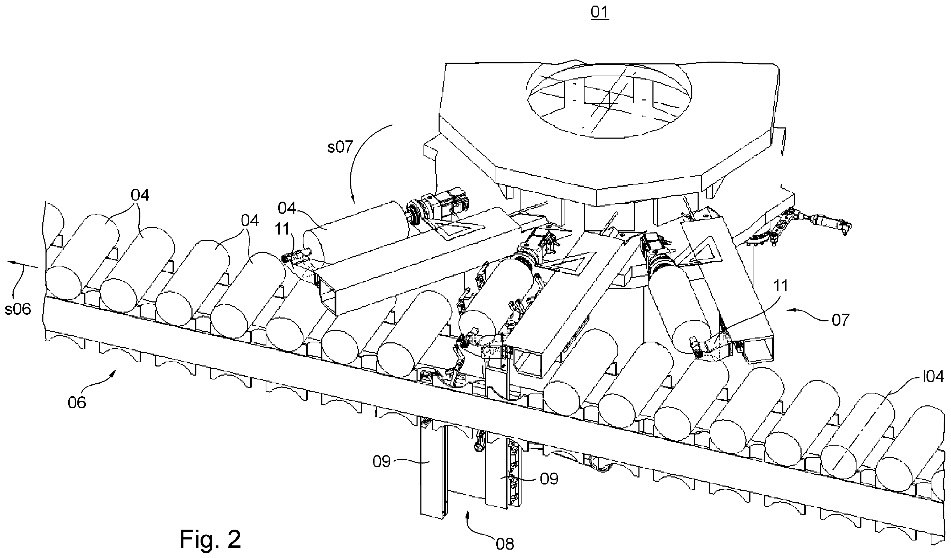

Die beispielhaft in der Fig. 2 in einem gegenüber der Fig. 1 vergrößerten Ausschnitt perspektivisch dargestellte Transportvorrichtung 03 der vorgenannten Bearbeitungsmaschine 01 weist zwei voneinander getrennte Fördereinrichtungen 06; 07 auf, nämlich eine erste Fördereinrichtung 06 und eine zweite Fördereinrichtung 07. Die erste Fördereinrichtung 06 transportiert an einer der Bearbeitungsmaschine 01 vorgeordneten Aufnahmestation 19 z. B. maschinell oder durch die Tätigkeit einer Bedienperson aufgenommene, in der Bearbeitungsmaschine 01 zu bearbeitende Objekte 04 entlang eines z. B. durch ein Förderband vorgegebenen ersten Förderweges s06 und die zweite Fördereinrichtung 07 transportiert dieselben in der Bearbeitungsmaschine 01 zu bearbeitenden Objekte 04 entlang eines insbesondere in sich geschlossenen, z. B. durch eine karussellartige Einrichtung vorgegebenen zweiten Förderweges s07, wobei die in der Bearbeitungsmaschine 01 zu bearbeitenden Objekte 04 entlang des zweiten Förderweges s07 umlaufend bewegt sind. Die zweite Fördereinrichtung 07 ist z. B. als ein Drehtisch ausgebildet, wobei der Drehtisch vorzugsweise mehrere Halteeinrichtungen 11 jeweils zum Halten von einem der in der Bearbeitungsmaschine 01 zu bearbeitenden Objekte 04 aufweist. Damit sind in der Transportvorrichtung 03 der Bearbeitungsmaschine 01 für die in dieser Bearbeitungsmaschine 01 zu bearbeitenden Objekte 04 zwei verschiedene voneinander getrennte Förderwege s06; s07 jeweils starr vorgegeben, die sich in ihrer jeweiligen Transportrichtung T voneinander unterscheiden.

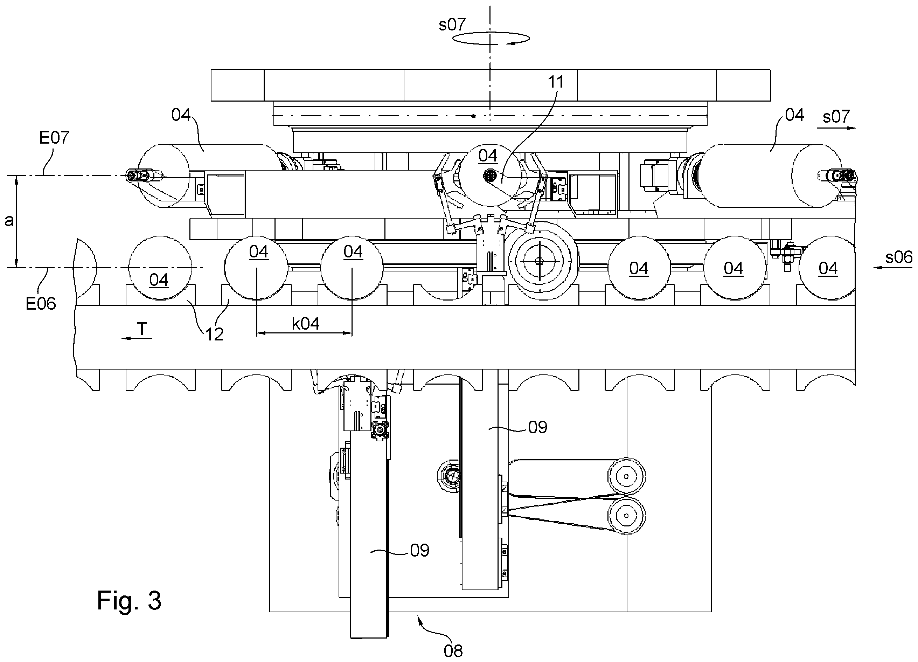

Die Transportvorrichtung 03 weist mindestens eine Übergabeeinrichtung 08 mit einer im zweiten Förderweg s07 der zweiten Fördereinrichtung 07 festgelegten Übergabeposition auf, an welcher Übergabeposition der mindestens einen Übergabeeinrichtung 08 die in der Bearbeitungsmaschine 01 zu bearbeitenden Objekte 04 von der ersten Fördereinrichtung 06 jeweils einzeln und nacheinander an die zweite Fördereinrichtung 07 übergeben werden oder zumindest übergebbar sind und auch von der zweiten Fördereinrichtung 07 wieder an die erste Fördereinrichtung 06 zurückgegeben werden oder zumindest zurückgebbar sind. In der in der Fig. 3 beispielhaft dargestellten Ausführung ist vorgesehen, dass der erste Förderweg s06 der ersten Fördereinrichtung 06 und der zweite Förderweg s07 der zweiten Fördereinrichtung 07 zumindest an der mindestens einen Übergabeeinrichtung 08 in zwei verschiedenen Ebenen E06; E07 angeordnet sind, wobei diese beiden Ebenen E06; E07 zumindest in einem die Übergabeposition aufweisenden Aktionsbereich B der Übergabeeinrichtung 08 einen von Null verschiedenen Abstand a voneinander aufweisen. Diese beiden Ebenen E06; E07 sind vorzugsweise parallel zueinander angeordnet. Die Förderwege s06; s07 sind zumindest in dem Aktionsbereich B der betreffenden Übergabeeinrichtung 08 vorzugsweise vertikal übereinander angeordnet. Sofern die beiden Förderwege s06; s07 in zwei verschiedenen Ebenen E06; E07 angeordnet sind, weisen sie vorzugsweise zumindest in dem jeweiligen Aktionsbereich B der betreffenden mindestens einen Übergabeeinrichtung 08 eine gemeinsame Schnittfläche auf.

Die mindestens eine Übergabeeinrichtung 08 der Transportvorrichtung 03 weist in ihrer vorteilhaften Ausbildung jeweils mindestens eine steuerbare Handhabungseinrichtung 09 auf, wobei diese Handhabungseinrichtung 09 z. B. orthogonal oder in einem schiefen, also in einem spitzen von 90° abweichenden Winkel zum ersten Förderweg s06 wirkend angeordnet ist. Die betreffende Handhabungseinrichtung 09 ist z. B. jeweils in Form einer Hubeinrichtung 09 ausgebildet. Mit der z. B. jeweils als eine Hubeinrichtung 09 ausgebildeten Handhabungseinrichtung 09 wird je Arbeitsvorgang bzw. je Hubvorgang vorzugsweise jeweils ein einzelnes der in der Bearbeitungsmaschine 01 zu bearbeitenden Objekte 04 aus dem ersten Förderweg s06 entnommen, oder es ist dort mittels der betreffenden Handhabungseinrichtung 09 zumindest entnehmbar, wobei dieses Objekt 04 dann mittels dieser Handhabungseinrichtung 09 in den zweiten Förderweg s07 gehoben wird bzw. zumindest hebbar ist, um das betreffende Objekt 04 im zweiten Förderweg s07 an der von der Übergabeeinrichtung 08 vorgesehenen Übernahmeposition zur Übernahme durch die zweite Fördereinrichtung 07 zu positionieren. Die zweite Fördereinrichtung 07 weist in ihrer vorteilhaften Ausbildung mindestens eine steuerbare Halteeinrichtung 11 auf, wobei die betreffende Halteeinrichtung 11 z. B. als eine einseitig oder mehrseitig, insbesondere zweiseitig an das in der Bearbeitungsmaschine 01 zu bearbeitende Objekt 04 angreifende Greifeinrichtung 11 ausgebildet ist, mit welcher Greifeinrichtung 11 ein in den zweiten Förderweg s07 gehobenes in der Bearbeitungsmaschine 01 zu bearbeitendes Objekt 04 bei seinem Transport entlang des zweiten Förderweges s07 gehalten oder zumindest haltbar, insbesondere greifbar ist. Dabei sind die jeweilige Bewegung der mindestens einen z. B. als Hubeinrichtung 09 ausgebildeten Handhabungseinrichtung 09 und die Bewegung der Greifeinrichtung 11 von einer (nicht dargestellten) z. B. elektrischen oder pneumatischen Steuereinheit zur Übergabe eines in der Bearbeitungsmaschine 01 zu bearbeitenden Objektes 04 aufeinander abgestimmt bzw. miteinander synchronisiert. Das von der Greifeinrichtung 11 der zweiten Fördereinrichtung 07 ergriffene Objekt 04 wird mit der zweiten Fördereinrichtung 07 für seine Bearbeitung an mindestens eine Bearbeitungsstation 02 der Bearbeitungsmaschine 01 transportiert oder ist mit der zweiten Fördereinrichtung 07 zumindest dorthin transportierbar. Die in der Bearbeitungsmaschine 01 zu bearbeitenden Objekte 04 werden bzw. sind von der ersten Fördereinrichtung 06 vorzugsweise einzeln und z. B. aneinandergereiht oder voneinander beabstandet in einer kontinuierlichen Bewegung zur Übergabeeinrichtung 08 transportiert.

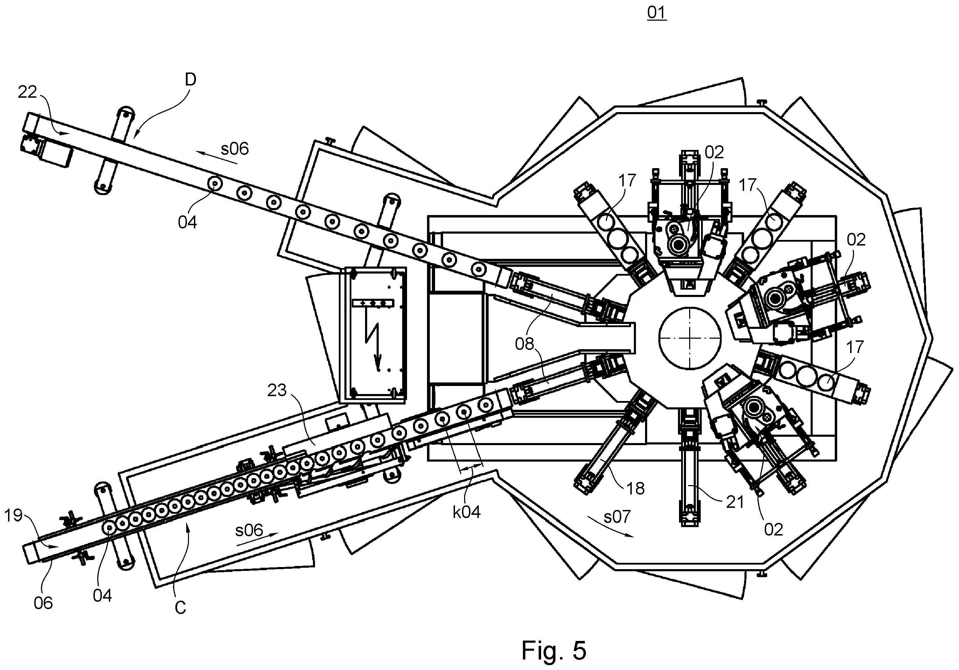

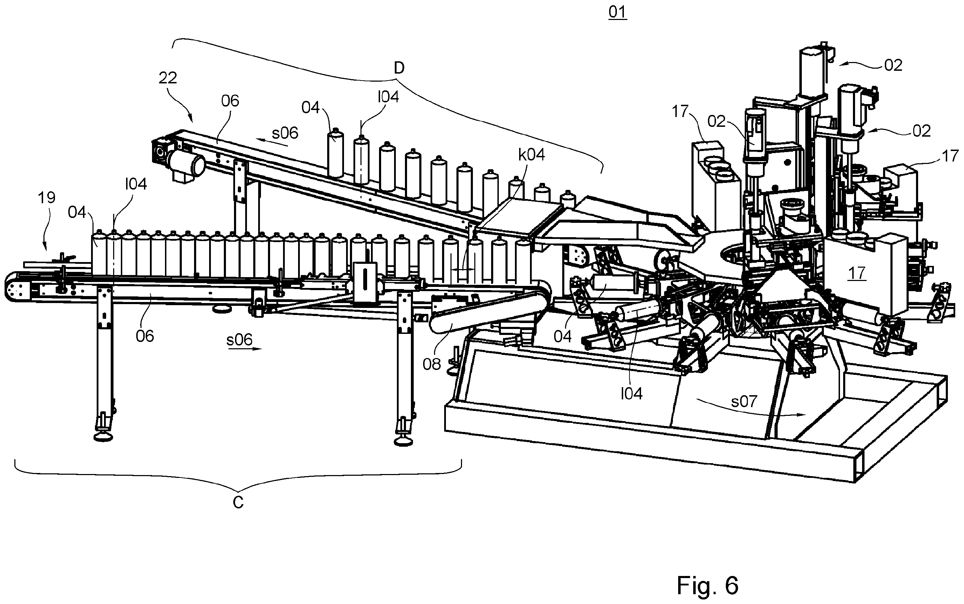

Die erste Fördereinrichtung 06 weist entweder einen aus einem einzigen Abschnitt C oder einen aus zwei getrennten Abschnitten C und D bestehenden ersten Förderweg s06 auf, wobei der erste Förderweg s06 vorzugsweise linear ausgebildet ist. Die zweite Fördereinrichtung 07 weist einen insbesondere in sich geschlossenen zweiten Förderweg s07 auf, wobei der zweite Förderweg s07 z. B. eine Kreisbahn oder ein Oval beschreibt. Zumindest in dem die Übergabeposition aufweisenden Aktionsbereich B der Übergabeeinrichtung 08 beschreibt der zweite Förderweg s07 einen Kreisabschnitt. In dem Fall des eine in sich geschlossene bogenförmige Umlaufbahn beschreibenden zweiten Förderweges s07 ist der eine lineare Abschnitt C des ersten Förderweges s06 tangential zum zweiten Förderweg s07 angeordnet.
Die in der Bearbeitungsmaschine 01 zu bearbeitenden, z. B. zylindrisch oder konisch geformten Objekte 04 weisen jeweils eine Längsachse I04 auf, wobei ihre jeweilige Längsachse I04 in der ersten Ebene E06 erfindungsgemäß liegend und/oder z. B. orthogonal zum ersten Förderweg s06 gerichtet ist. Auch ein von der Greifeinrichtung 11 der zweiten Fördereinrichtung 07 ergriffenes Objekt 04 ist mit seiner Längsachse I04 in der zweiten Ebene E07 erfindungsgemäß liegend und/oder z. B. orthogonal zum zweiten Förderweg s07 gerichtet. In beiden Ebenen E06; E07 wird jedes der in der Bearbeitungsmaschine 01 zu bearbeitenden Objekte 04 vorzugsweise in gleicher Ausrichtung, erfindungsgemäß liegend transportiert. Auch erfolgt die Übergabe jedes der in der Bearbeitungsmaschine 01 zu bearbeitenden Objekte 04 von der ersten Ebene E06 in die zweite Ebene E07 erfindungsgemäß in liegender Ausrichtung dieser Objekte 04. Die Fig. 5 und 6 zeigen eine zu den Fig. 1 bis 4 alternative nicht erfindungsgemäße Ausführung der Transportvorrichtung 03 insbesondere hinsichtlich der ersten Fördereinrichtung 06, wobei die in den Fig. 5 und 6 dargestellte erste Fördereinrichtung 06 zwei Abschnitte C und D aufweist. Der Abschnitt C der ersten Fördereinrichtung 06 dient der Zuführung der in der Bearbeitungsmaschine 01 zu bearbeitenden Objekte 04 ausgehend von der Aufnahmestation 19, wohingegen im Abschnitt D der ersten Fördereinrichtung 06 in der Bearbeitungsmaschine 01 bereits bearbeitete Objekte 04 in Richtung einer Entnahmestation 22 abgeführt werden, um dort die Transportvorrichtung 03 zu verlassen.

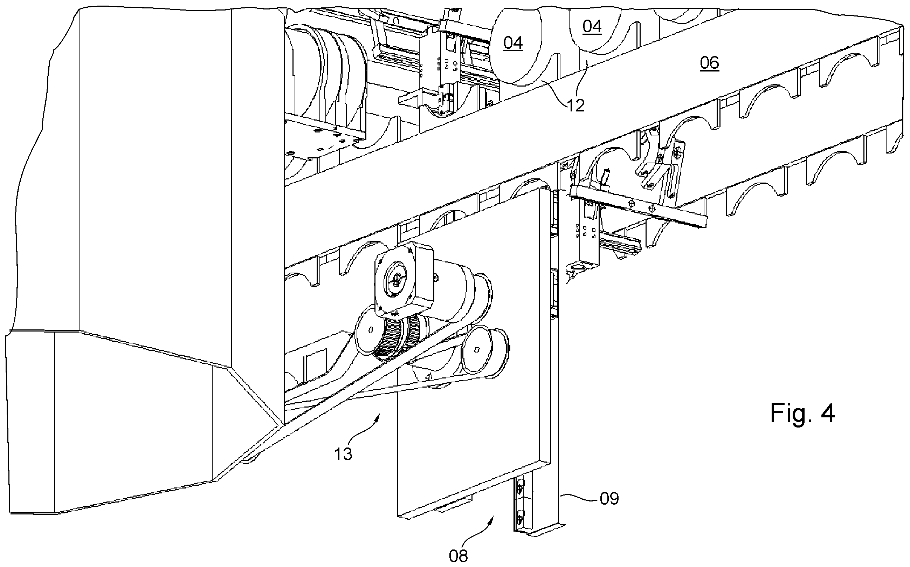

Bei der in den Fig. 5 und 6 gezeigten Ausführung der ersten Fördereinrichtung 06 werden die in der Bearbeitungsmaschine 01 zu bearbeitenden Objekte 04 im Abschnitt C entlang des ersten Förderweges s06 in der ersten Ebene E06 z. B. stehend an die Bearbeitungsmaschine 01 herangeführt und in der entlang des ersten Förderweges s06 ersten Übergabeeinrichtung 08 z. B. mit einer von der betreffenden Handhabungseinrichtung 09 ausgeführten Schwenkbewegung mit Bezug auf ihre jeweilige Längsachse I04 jeweils in ihre liegende Ausrichtung gebracht und dann wie in der zuvor beschriebenen bevorzugten Ausführung mit der z. B. als Drehtisch ausgebildeten zweiten Fördereinrichtung 07 in der zweiten Ebene E07 liegend entlang des zweiten Förderweges s07 zu mindestens einer Bearbeitungsstation 02 der Bearbeitungsmaschine 01 transportiert. An der entlang des ersten Förderweges s06 zweiten Übergabeeinrichtung 08 werden die in der Bearbeitungsmaschine 01 bearbeiteten Objekte 04 bei ihrer Übergabe von der zweiten Fördereinrichtung 07 an den Abschnitt D der ersten Fördereinrichtung 06 z. B. mit einer von der betreffenden Handhabungseinrichtung 09 ausgeführten Schwenkbewegung mit Bezug auf ihre jeweilige Längsachse I04 wieder jeweils in ihre jeweilige stehende Ausrichtung gebracht. Bei dieser in den Fig. 5 und 6 gezeigten Ausführung der ersten Fördereinrichtung 06 ist im Abschnitt C der ersten Fördereinrichtung 06 z. B. eine Vereinzelungsvorrichtung 23 vorgesehen, wobei diese Vereinzelungsvorrichtung 23 im Abschnitt C der ersten Fördereinrichtung 06 in Richtung der entlang des ersten Förderweges s06 ersten Übergabeeinrichtung 08 jeweils in einem Berührungskontakt aneinandergereiht transportierte, in der Bearbeitungsmaschine 01 zu bearbeitende Objekte 04 durch Ausbildung eines Abstandes k04 zwischen unmittelbar einander nachfolgende Objekte 04 vereinzelt, um diese Objekte 04 z. B. durch die betreffende Handhabungseinrichtung 09 der ersten Übergabeeinrichtung 08 zumindest besser greifbar zu machen. Auch im Abschnitt D der ersten Fördereinrichtung 06 werden die bereits in der Bearbeitungsmaschine 01 bearbeiteten Objekte 04 vorzugsweise voneinander beabstandet in Richtung der Entnahmestation 22 transportiert. Die Fig. 6 zeigt die in der Fig. 5 dargestellte Transportvorrichtung 03 und Bearbeitungsmaschine 01 in einer perspektivischen Darstellung.
Anhand der Fig. 3 und 4 werden nun noch weitere Details der in den Fig. 1 und 2 dargestellten Variante der Transportvorrichtung 03 an der vorgenannten Bearbeitungsmaschine 01 erläutert. In einer bevorzugten Ausführung weist die z. B. nur den Abschnitt C aufweisende erste Fördereinrichtung 06 in ihrer Transportrichtung T in einer Reihe in einer z. B. im Abstand k04 äquidistanten Anordnung eine Vielzahl von entlang des ersten Förderweges s06 bewegten oder zumindest bewegbaren Mitnehmern 12 auf, wobei jeder dieser Mitnehmer 12 jeweils ein einzelnes Exemplar der in der Bearbeitungsmaschine 01 zu bearbeitenden Objekte 04 erfindungsgemäß liegend aufnimmt. Die erste Fördereinrichtung 06 transportiert jeweils nacheinander in der Bearbeitungsmaschine 01 zu bearbeitende Objekte 04 demnach jeweils ohne einen Berührungskontakt zueinander zur Übergabeeinrichtung 08. Ein einzelnes Objekt 04, vorzugsweise jedes mit der ersten Fördereinrichtung 06 z. B. in der ersten Ebene E06 entlang des ersten Förderweges s06 zur Übergabeeinrichtung 08 transportiertes Objekt 04 wird in der Übergabeeinrichtung 08 mittels der betreffenden z. B. als Hubeinrichtung 09 ausgebildeten Handhabungseinrichtung 09 z. B. in Richtung einer in der ersten Ebene E06 stehenden Normalen aus der ersten Ebene E06 heraus durch eine Entnahme aus den Mitnehmern 12 in die zweite Ebene E07 der zweiten Fördereinrichtung 07 gehoben und dort in der zweiten Ebene E07 vorzugsweise während der insbesondere entgegen der Transportrichtung T der ersten Fördereinrichtung 06 gerichteten Bewegung der zweiten Fördereinrichtung 07 von der mindestens einen Greifeinrichtung 11 dieser zweiten Fördereinrichtung 07 ergriffen, wobei zu diesem Zeitpunkt die betreffende Greifeinrichtung 11 der zweiten Fördereinrichtung 07 an der Übergabeeinrichtung 08 in einer Überdeckung mit dem ersten Förderweg s06 der ersten Fördereinrichtung 06 positioniert wird bzw. ist. Anschließend wird dann das von der betreffenden Greifeinrichtung 11 ergriffene Objekt 04 entlang des zweiten Förderweges s07 zu mindestens einer Bearbeitungsstation 02 der Bearbeitungsmaschine 01 transportiert. Die zweite Fördereinrichtung 07 weist vorzugsweise mehrere vorzugsweise baugleiche Halteeinrichtungen 11, insbesondere Greifeinrichtungen 11 auf, die entsprechend der Bewegung der zweiten Fördereinrichtung 07 nacheinander jeweils in ihrer jeweiligen Übernahmeposition an der Übergabeeinrichtung 08 positioniert werden. Jede Greifeinrichtung 11 ist z. B. als ein Sauggreifer ausgebildet. Jede der Halteeinrichtungen 11 der zweiten Fördereinrichtung 07 kann auch eine Klemmeinrichtung aufweisen oder als eine solche ausgebildet sein, wobei das betreffende in der Bearbeitungsmaschine 01 zu bearbeitende Objekt 04 jeweils z. B. mit seinen jeweiligen Stirnseiten zwischen zwei sich gegenüber stehenden Elementen der betreffenden Klemmeinrichtung geklemmt und z. B. durch diese Klemmung gehalten wird bzw. ist. Eine vorteilhafte Ausbildung der Klemmrichtung sieht vor, diese jeweils als einen horizontal angeordneten Spanndorn auszubilden. Nachdem das in der Bearbeitungsmaschine 01 zu bearbeitende Objekt 04 den erfindungsgemäß in sich geschlossenen, z. B. karussellartig umlaufenden zweiten Förderweg s07 der zweiten Fördereinrichtung 07 durchlaufen hat, wird das an mindestens einer Bearbeitungsstation 02 der Bearbeitungsmaschine 01 bearbeitete Objekt 04 vorzugsweise an derselben Übergabeeinrichtung 08 wie zuvor wieder an die erste Fördereinrichtung 06 zurückgegeben, indem die betreffende Greifeinrichtung 11 das von ihr ergriffene an mindestens einer Bearbeitungsstation 02 der Bearbeitungsmaschine 01 bearbeitete Objekt 04 in der Übernahmeposition an die Hubeinrichtung 09 übergibt und mittels einer Absenkung dieser Hubeinrichtung 09 von der zweiten Ebene E07 in die erste Ebene E06 wieder an einem Mitnehmer 12 der ersten Fördereinrichtung 06 anordnet, woraufhin das derart abgelegte an mindestens einer Bearbeitungsstation 02 der Bearbeitungsmaschine 01 bearbeitete Objekt 04 in Transportrichtung T der ersten Fördereinrichtung 06 aus einem Bereich der Bearbeitungsmaschine 01 abtransportiert und an der Entnahmestation 22 der ersten Fördereinrichtung 06 der Transportvorrichtung 03 entnommen wird. Bei dieser Ausgestaltung der Transportvorrichtung 03 wird für die Zuführung der in der Bearbeitungsmaschine 01 zu bearbeitenden Objekte 04 und für deren Abführung aus der Bearbeitungsmaschine 01 heraus jeweils dieselbe erste Fördereinrichtung 06 verwendet, was kostengünstig ist. Erfindungsgemäß ist der erste Förderweg s06 in dem die Übergabeposition aufweisenden Aktionsbereich B der Übergabeeinrichtung 08 tangential zum zweiten Förderweg s07 angeordnet, wobei der Aktionsbereich B der Übergabeeinrichtung 08 z. B. durch einen Wirkungsbereich oder eine Griffweite der mindestens einen zur Übergabeeinrichtung 08 gehörenden Handhabungseinrichtung 09 bestimmt ist. Die erste Fördereinrichtung 06 weist dann erfindungsgemäß sowohl eine der Bearbeitungsmaschine 01 vorgeordnete Aufnahmestation 19 zur Aufnahme von in der Bearbeitungsmaschine 01 zu bearbeitenden Objekten 04 als auch eine der Bearbeitungsmaschine 01 nachgeordnete Entnahmestation 22 zur Entnahme von bereits in der Bearbeitungsmaschine 01 bearbeiteten Objekten 04 auf.
Die Bewegung der mit der ersten Fördereinrichtung 06 entlang des ersten Förderweges s06 bewegten Objekte 04 erfolgt erfindungsgemäß kontinuierlich, wohingegen sich die Greifeinrichtung 11 der zweiten Fördereinrichtung 07 entlang des zweiten Förderweges s07 erfindungsgemäß diskontinuierlich, insbesondere in einem insbesondere mit der Bewegung der von der ersten Fördereinrichtung 06 bewegten Objekte 04 synchronisierten Takt bewegt. Die Positionierung eines in der Bearbeitungsmaschine 01 zu bearbeitenden Objektes 04 im zweiten Förderweg s07 ist vorzugsweise mit der Bewegung der zweiten Fördereinrichtung 07 synchronisiert und/oder die Positionierung eines in der Bearbeitungsmaschine 01 bearbeiteten Objektes 04 im ersten Förderweg s06 mit der Bewegung der ersten Fördereinrichtung 06. Jeweils mit Bezug auf die bewegten Objekte 04 sind die Transportrichtung T der ersten Fördereinrichtung 06 und die Transportrichtung T der zweiten Fördereinrichtung 07 vorzugsweise gegenläufig zueinander ausgebildet. Eine Taktrate für in der Bearbeitungsmaschine 01 an mindestens einer von deren Bearbeitungsstationen 02 zu bearbeitende Objekte 04 liegt z. B. im Bereich von 60 bis 200 Objekten 04 pro Minute, vorzugsweise bei 120 Objekten 04 pro Minute. Alternativ zur Taktung kann auch die zweite Fördereinrichtung 07 eine kontinuierliche Bewegung ausführen, die zur Bewegung der ersten Fördereinrichtung 06 vorzugsweise synchronisiert ist. Fig. 4 zeigt einen insbesondere von der Steuereinheit gesteuerten vorzugsweise elektrischen Antrieb 13 der mindestens einen zu der betreffenden Übergabeeinrichtung 08 gehörenden Handhabungseinrichtung 09, d. h. in diesem Beispiel der mindestens einen Hubeinrichtung 09.

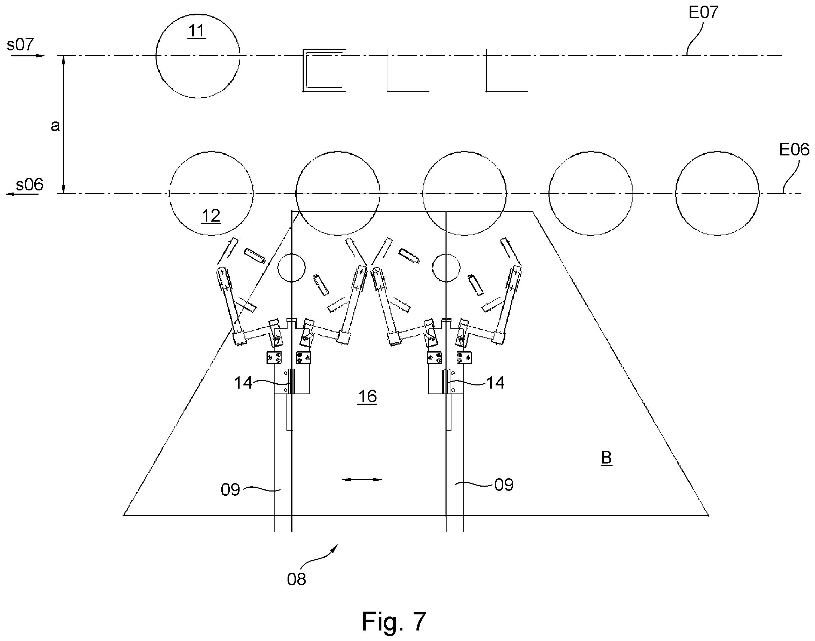

Die Fig. 7 bis 13 zeigen jeweils in einer schematischen Darstellung verschiedene in einem Bewegungszyklus aufeinanderfolgende Betriebszustände der Übergabeeinrichtung 08 der bereits anhand der Fig. 1 bis 4 beschriebenen Transportvorrichtung 03, wobei die Übergabeeinrichtung 08 in den Fig. 7 bis 13 in einer besonders vorteilhaften Ausführungsvariante dargestellt ist. So weist die in dieser Transportvorrichtung 03 einzige Übergabeeinrichtung 08 in diesem Beispiel mehrere, insbesondere zwei Handhabungseinrichtungen 09 vorzugsweise jeweils in Form einer Hubeinrichtung 09 auf, wobei jede dieser Handhabungseinrichtungen 09 zumindest in einer Richtung der von ihnen jeweils ausführbaren Bewegungen jeweils an einer vorzugsweise geradlinigen Führungsschiene 14 geführt ist. Diese Führungsschienen 14 sind jeweils z. B. orthogonal oder in einem Winkel zum ersten Förderweg s06 und/oder parallel zueinander angeordnet, wobei ihre Anordnung vorzugsweise an einem selben Träger 16 oder Rahmen 16 vorgesehen ist, so dass die beiden Führungsschienen 14 mittels dieses Rahmens 16 gemeinsam entlang eines zum ersten Förderweg s06 gleichgerichteten Verfahrweges insbesondere unabhängig von einer Bewegung der Handhabungseinrichtungen 09 verfahrbar sind. Der Rahmen 16 gehört zur Übergabeeinrichtung 08 und ist in dem zur Übergabeeinrichtung 08 gehörenden z. B. trapezförmig ausgebildeten Aktionsbereich B beweglich angeordnet und insbesondere entlang des ersten Förderweges s06 bidirektional fahrbar, d. h. parallel zum ersten Förderweg s06 sowohl in Transportrichtung T der von der ersten Fördereinrichtung 06 bewegten Objekte 04 als auch entgegengesetzt dazu, und zwar vorzugsweise linear fahrbar. Zwei sich vorzugsweise gegenüber liegende Positionen innerhalb des Aktionsbereiches B der Übergabeeinrichtung 08 begrenzen den vom Rahmen 16 ausführbaren Verfahrweg, so dass der Verfahrweg des Rahmens 16 beidseitig begrenzt ist. Diese Bewegbarkeit des Rahmens 16 entlang seines Verfahrweges ist in der Fig. 5 durch einen Doppelpfeil angedeutet. In einer vorteilhaften Ausführungsvariante ist die jeweilige Handhabungseinrichtung 09 z. B. in mindestens einem Linearlager an ihrer jeweiligen Führungsschiene 14 gelagert. Die jeweiligen Bewegungen der an demselben Rahmen 16 angeordneten Handhabungseinrichtungen 09 sind vorzugsweise unabhängig voneinander ausführbar. Parallel oberhalb des z. B. in der ersten Ebene E06 verlaufenden ersten Förderweges s06 der ersten Fördereinrichtung 06 ist im Abstand a z. B. in der zweiten Ebene E07 der zweite Förderweg s07 der zweiten Fördereinrichtung 07 angeordnet. In den Fig. 7 bis 13 sind beispielhaft jeweils in einer Reihe hintereinander fünf Mitnehmer 12 der ersten Fördereinrichtung 06 und eine Greifeinrichtung 11 der zweiten Fördereinrichtung 07 dargestellt. Die Mitnehmer 12 der ersten Fördereinrichtung 06 sind bzw. werden vorzugsweise kontinuierlich bewegt, wohingegen die Bewegung der zweiten Fördereinrichtung 07 in diesem Beispiel getaktet erfolgt.

Fig. 7 zeigt einen ersten Betriebszustand der Übergabeeinrichtung 08. Der Rahmen 16 ist im Aktionsbereich B der Übergabeeinrichtung 08 noch weitgehend auf der einem Ablauf der ersten Fördereinrichtung 06 zugewandten Seite angeordnet, wobei die dem Ablauf der ersten Fördereinrichtung 06 zugewandte Seite diejenige Seite des Aktionsbereiches B der Übergabeeinrichtung 08 ist, an der sich ein mit der ersten Fördereinrichtung 06 transportiertes Objekt 04 in Transportrichtung T entlang des ersten Förderweges s06 der ersten Fördereinrichtung 06 vom Aktionsbereich B der Übergabeeinrichtung 08 entfernt. In diesem ersten Betriebszustand der Übergabeeinrichtung 08 befinden sich eine erste Handhabungseinrichtung 09 und eine zweite Handhabungseinrichtung 09 jeweils unterhalb des ersten Förderweges s06 der ersten Fördereinrichtung 06, d. h. z. B. unterhalb der ersten Ebene E06, in ihrer jeweiligen Ausgangsstellung. Eine Greifeinrichtung 11 der zweiten Fördereinrichtung 07 befindet sich entlang ihres zweiten Förderweges s07 in einem Zulauf zum Aktionsbereich B der Übergabeeinrichtung 08, wobei der Zulauf der zweiten Fördereinrichtung 07 dadurch gegeben ist, dass sich ein mit der zweiten Fördereinrichtung 07 transportiertes Objekt 04 in Transportrichtung T entlang des zweiten Förderweges s07 dem Aktionsbereich B der Übergabeeinrichtung 08 nähert. Soweit im Folgenden auf einen Zulauf zum Aktionsbereich B der Übergabeeinrichtung 08 oder auf einen Ablauf von demselben Bezug genommen wird, gelten diese Begriffserläuterungen auch dort zumindest sinngemäß.

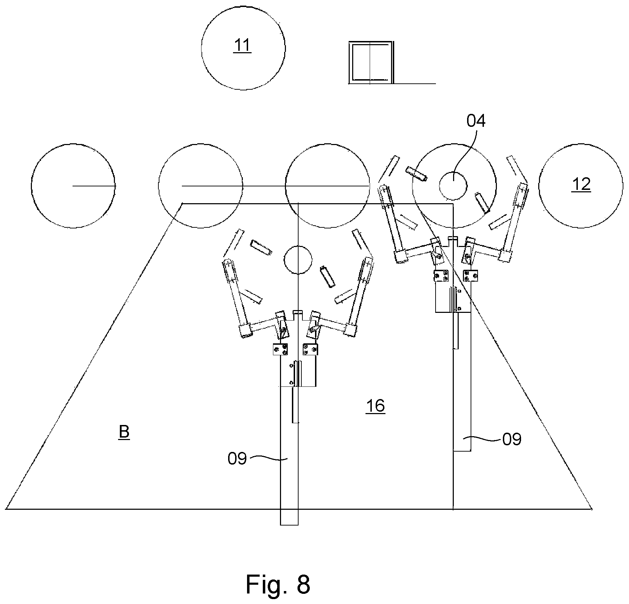

Fig. 8 zeigt einen zweiten Betriebszustand der Übergabeeinrichtung 08. Der die Handhabungseinrichtungen 09 tragende Rahmen 16 ist im Aktionsbereich B der Übergabeeinrichtung 08 an seine dem Zulauf der ersten Fördereinrichtung 06 zugewandte äußerste Position gefahren. Zudem ist die dem Zulauf der ersten Fördereinrichtung 06 zugewandte erste Handhabungseinrichtung 09 entlang ihrer Führungsschiene 14 bis zu einem der Mitnehmer 12 der ersten Fördereinrichtung 06 angehoben worden. Dort ergreift die erste Handhabungseinrichtung 09 aus einem der Mitnehmer 12 der ersten Fördereinrichtung 06 ein an die Übergabeeinrichtung 08 herangeführtes in der Bearbeitungsmaschine 01 zu bearbeitendes Objekt 04. Die dem Ablauf der ersten Fördereinrichtung 06 zugewandte zweite Handhabungseinrichtung 09 verharrt noch unterhalb des ersten Förderweges s06 der ersten Fördereinrichtung 06, z. B. unterhalb der ersten Ebene E06. Die Greifeinrichtung 11 der zweiten Fördereinrichtung 07 hat z. B. aus einer Ruhephase ihres Taktes heraus ihre Bewegung entlang des zweiten Förderweges s07 begonnen und inzwischen den Aktionsbereich B der Übergabeeinrichtung 08 erreicht.

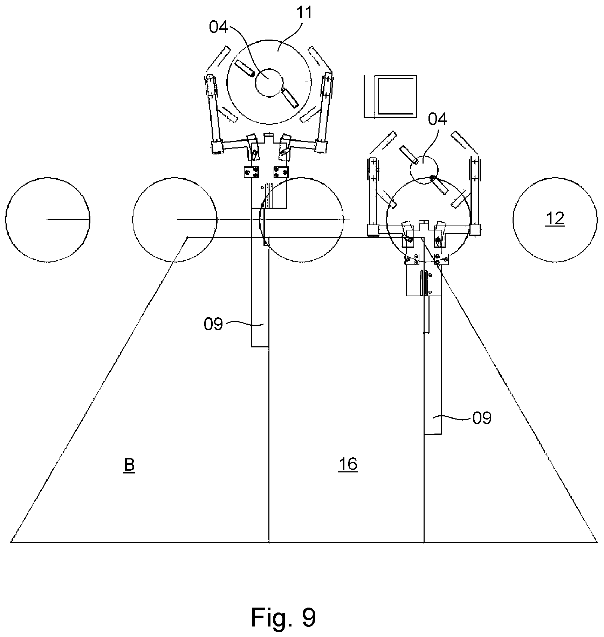

Fig. 9 zeigt einen dritten Betriebszustand der Übergabeeinrichtung 08. Während die dem Zulauf der ersten Fördereinrichtung 06 zugewandte erste Handhabungseinrichtung 09 eines der von der ersten Fördereinrichtung 06 transportierten Objekte 04 ergreift und anschließend weiter in Richtung zum zweiten Förderweg s07 der zweiten Fördereinrichtung 07, d. h. z. B. in Richtung der zweiten Ebene E07 transportiert, wird die dem Ablauf der ersten Fördereinrichtung 06 zugewandte zweite Handhabungseinrichtung 09 entlang ihrer Führungsschiene 14 bis zum zweiten Förderweg s07 der zweiten Fördereinrichtung 07, d. h. z. B. in die Höhe der zweiten Ebene E07 angehoben, um dort ein bereits in der Bearbeitungsmaschine 01 bearbeitetes Objekt 04 zu ergreifen und von der zweiten Fördereinrichtung 07 abzunehmen. Der die Handhabungseinrichtungen 09 tragende Rahmen 16 beginnt daraufhin, sich von seiner dem Zulauf der ersten Fördereinrichtung 06 zugewandten äußersten Position innerhalb des Aktionsbereiches B der Übergabeeinrichtung 08 in Richtung des Ablaufes der ersten Fördereinrichtung 06 zu bewegen.

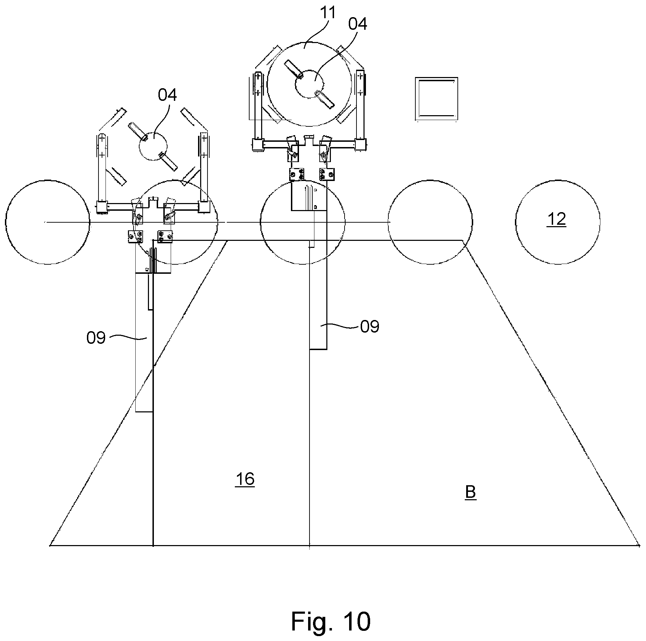

Fig. 10 zeigt einen vierten Betriebszustand der Übergabeeinrichtung 08. Der die Handhabungseinrichtungen 09 tragende Rahmen 16 wurde innerhalb des Aktionsbereiches B der Übergabeeinrichtung 08 zu seiner dem Ablauf der ersten Fördereinrichtung 06 zugewandten äußersten Position gefahren. Die dem Ablauf der ersten Fördereinrichtung 06 zugewandte zweite Handhabungseinrichtung 09 hat in diesem vierten Betriebszustand der Übergabeeinrichtung 08 das von ihr ergriffene bereits in der Bearbeitungsmaschine 01 bearbeitete Objekt 04 vom zweiten Förderweg s07 der zweiten Fördereinrichtung 07, d. h. z. B. von der zweiten Ebene E07 nahezu bis auf den ersten Förderweg s06 der ersten Fördereinrichtung 06, d. h. z. B. bis auf die erste Ebene E06 der ersten Fördereinrichtung 06 abgesenkt. Die Greifeinrichtung 11 der zweiten Fördereinrichtung 07 ist nun innerhalb des Aktionsbereiches B der Übergabeeinrichtung 08 an ihrer Übernahmeposition positioniert. Die dem Zulauf der ersten Fördereinrichtung 06 zugewandte erste Handhabungseinrichtung 09 übergibt das von ihr in den zweiten Förderweg s07 der zweiten Fördereinrichtung 07, d. h. z. B. in die zweite Ebene E07 angehobene in der Bearbeitungsmaschine 01 zu bearbeitende Objekt 04 der zweiten Fördereinrichtung 07.

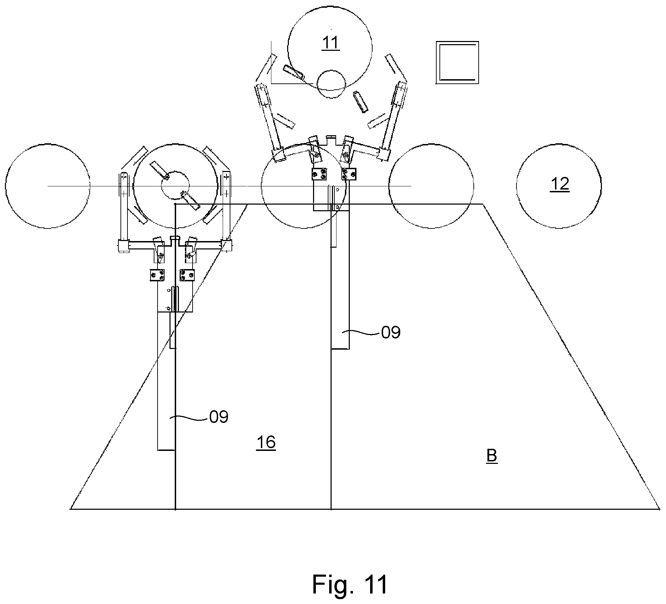

Fig. 11 zeigt einen fünften Betriebszustand der Übergabeeinrichtung 08. Die dem Ablauf der ersten Fördereinrichtung 06 zugewandte zweite Handhabungseinrichtung 09 legt das von ihr ergriffene bereits in der Bearbeitungsmaschine 01 bearbeitete Objekt 04 an einem freien, d. h. nicht mit einem Objekt 04 belegten Mitnehmer 12 der ersten Fördereinrichtung 06 ab. Die dem Zulauf der ersten Fördereinrichtung 06 zugewandte erste Handhabungseinrichtung 09 wird vom zweiten Förderweg s07 der zweiten Fördereinrichtung 07, d. h. z. B. von der zweiten Ebene E07, in Richtung des ersten Förderweges s06 der ersten Fördereinrichtung 06, d. h. z. B. in Richtung der ersten Ebene E06 der ersten Fördereinrichtung 06 abgesenkt.

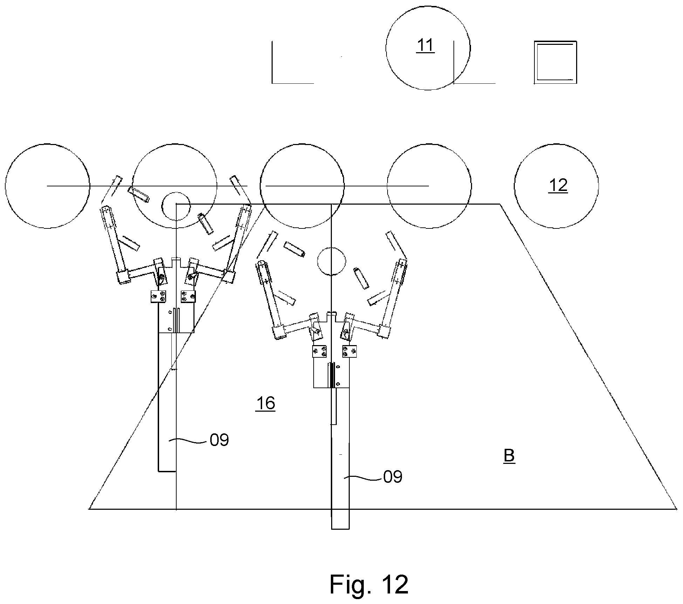

Fig. 12 zeigt einen sechsten Betriebszustand der Übergabeeinrichtung 08. Die dem Zulauf der ersten Fördereinrichtung 06 zugewandte erste Handhabungseinrichtung 09 wird bis unterhalb des ersten Förderweges s06 der ersten Fördereinrichtung 06, d. h. z. B. der ersten Ebene E06 abgesenkt. Auch die dem Ablauf der ersten Fördereinrichtung 06 zugewandte zweite Handhabungseinrichtung 09 wird unter den ersten Förderweg s06 der ersten Fördereinrichtung 06, d. h. z. B. unter die erste Ebene E06 der ersten Fördereinrichtung 06 abgesenkt. Die innerhalb des Aktionsbereiches B der Übergabeeinrichtung 08 an ihrer Übernahmeposition positionierte Greifeinrichtung 11 der zweiten Fördereinrichtung 07 wird nun mit dem von ihr ergriffenen in der Bearbeitungsmaschine 01 zu bearbeitenden Objekt 04 entlang ihres zweiten Förderweges s07 weiter bewegt, insbesondere bis zu einer Bearbeitungsstation 02, die für die Bearbeitung von diesem Objekt 04 vorgesehen ist.

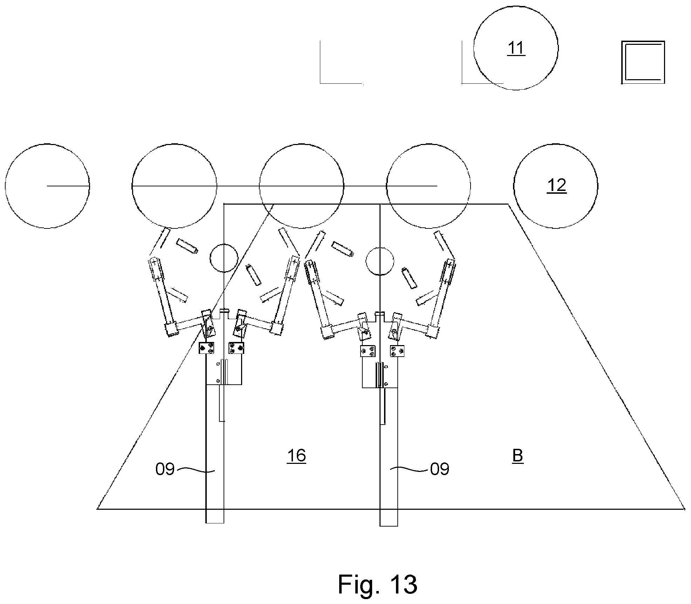

Fig. 13 zeigt einen siebten Betriebszustand der Übergabeeinrichtung 08. Beide Handhabungseinrichtungen 09 sind nun unter den ersten Förderweg s06 der ersten Fördereinrichtung 06, d. h. z. B. unter die erste Ebene E06 der ersten Fördereinrichtung 06 abgesenkt. Der die beiden Handhabungseinrichtungen 09 tragende Rahmen 16 verharrt zwar noch innerhalb des Aktionsbereiches B der Übergabeeinrichtung 08 an seiner dem Ablauf der ersten Fördereinrichtung 06 zugewandten äußersten Position. Für einen erneuten Durchlauf des anhand der Fig. 7 bis 13 aufgezeigten Bewegungszyklus kann dieser die beiden Handhabungseinrichtungen 09 tragende Rahmen 16 in Richtung des Zulaufs der ersten Fördereinrichtung 06 bewegt und damit wieder in den in der Fig. 7 gezeigten ersten Betriebszustand gebracht werden.

Zusammenfassend beschreiben die Fig. 7 bis 13 ein Verfahren zum Betreiben der Transportvorrichtung 03 für mehrere in einer vorzugsweise mindestens ein Druckwerk, insbesondere mindestens ein in einem Siebdruckverfahren druckendes Druckwerk aufweisenden Bearbeitungsmaschine 01 zu bearbeitende und/oder dort bearbeitete Objekte 04, wobei die Objekte 04 insbesondere als zumindest an ihrer jeweiligen Mantelfläche zu bearbeitende Hohlkörper ausgebildet sind und nacheinander entlang eines jeweils starr vorgegebenen ersten Förderweges s06 einer ersten Fördereinrichtung 06 und eines zweiten Förderweges s07 einer zweiten Fördereinrichtung 07 transportiert werden, wobei an einer im zweiten Förderweg s07 der zweiten Fördereinrichtung 07 festgelegten, insbesondere relativ zu den beiden Fördereinrichtungen 06; 07 ortsfesten Übergabeposition einer z. B. an einem gemeinsamen Träger 16 insbesondere zwei Handhabungseinrichtungen 09 aufweisenden Übergabeeinrichtung 08 in der Bearbeitungsmaschine 01 zu bearbeitende Objekte 04 von der ersten Fördereinrichtung 06 an die zweite Fördereinrichtung 07 und in der Bearbeitungsmaschine 01 bearbeitete Objekte 04 von der zweiten Fördereinrichtung 07 an die erste Fördereinrichtung 06 jeweils einzeln mittels einer der vorzugsweise beiden Handhabungseinrichtungen 09 übergeben werden, wobei die beiden vorzugsweise linear geführten Handhabungseinrichtungen 09 der Übergabeeinrichtung 08 in Verbindung mit der Übergabe von einem der Objekte 04 von der ersten Fördereinrichtung 06 an die zweite Fördereinrichtung 07 und/oder von der zweiten Fördereinrichtung 07 an die erste Fördereinrichtung 06 in einem Aktionsbereich B der Übergabeeinrichtung 08 relativ zu der Übergabeposition der Übergabeeinrichtung 08 entlang eines durch zwei sich vorzugsweise gegenüber liegenden Positionen begrenzten Verfahrweges gemeinsam vorzugsweise linear, insbesondere parallel zum ersten Förderweg s06 der ersten Fördereinrichtung 06 verfahren werden. Dabei werden in der bevorzugten Ausführung die Objekte 04 entlang des ersten Förderweges s06 der ersten Fördereinrichtung 06 kontinuierlich bewegt und/oder es werden die Objekte 04 entlang des zweiten Förderweges s07 der zweiten Fördereinrichtung 07 diskontinuierlich in einem Takt, d. h. schrittweise transportiert. Die entlang des zweiten Förderweges s07 der zweiten Fördereinrichtung 07 transportierten Objekte 04 werden zumindest im Aktionsbereich B der Übergabeeinrichtung 08 vorzugsweise gegenläufig zum ersten Förderweg s06 der ersten Fördereinrichtung 06 bewegt.

Im Einzelnen wird vorzugsweise folgender Bewegungszyklus abgearbeitet: Die erste Handhabungseinrichtung 09 ergreift im Aktionsbereich B der Übergabeeinrichtung 08 in dem von der ersten Fördereinrichtung 06 durchlaufenen ersten Förderweg s06 ein erstes der in der Bearbeitungsmaschine 01 zu bearbeitenden Objekte 04, während die zweite Handhabungseinrichtung 09 unterhalb des von der ersten Fördereinrichtung 06 durchlaufenen ersten Förderweges s06 in ihrer Ruhestellung verharrt und/oder während ein entlang des zweiten Förderweges s07 der zweiten Fördereinrichtung 07 transportiertes zweites Objekt 04 an der Übergabeposition der Übergabeeinrichtung 08 in dem von der zweiten Fördereinrichtung 07 durchlaufenen zweiten Förderweg s07 positioniert wird. Danach wird die zweite Handhabungseinrichtung 09 aus ihrer Ruhestellung unterhalb des von der ersten Fördereinrichtung 06 durchlaufenen ersten Förderweges s06 bis zu der Übergabeposition in dem von der zweiten Fördereinrichtung 07 durchlaufenen zweiten Förderweg s07 bewegt, während die erste Handhabungseinrichtung 09 das von ihr in dem von der ersten Fördereinrichtung 06 durchlaufenen ersten Förderweg s06 ergriffene erste Objekt 04 in Richtung des von der zweiten Fördereinrichtung 07 durchlaufenen zweiten Förderweges s07 bewegt. Sodann ergreift die zweite Handhabungseinrichtung 09 ein von der zweiten Fördereinrichtung 07 an die Übergabeposition in dem zweiten Förderweg s07 transportiertes zweites Objekt 04 und bewegt es aus dem von der zweiten Fördereinrichtung 07 durchlaufenen zweiten Förderweg s07 in Richtung des von der ersten Fördereinrichtung 06 durchlaufenen ersten Förderweges s06, bevor die erste Handhabungseinrichtung 09 mit dem von ihr in dem von der ersten Fördereinrichtung 06 durchlaufenen ersten Förderweg s06 ergriffenen ersten Objekt 04 die Übergabeposition in dem von der zweiten Fördereinrichtung 07 durchlaufenen zweiten Förderweg s07 erreicht. Die zweite Handhabungseinrichtung 09 legt das von ihr an der Übergabeposition in dem von der zweiten Fördereinrichtung 07 durchlaufenen zweiten Förderweg s07 ergriffene zweite Objekt 04 an einem freien Platz, d. h. insbesondere an einem freien Mitnehmer 12 der ersten Fördereinrichtung 06 in dem von der ersten Fördereinrichtung 06 durchlaufenen ersten Förderweg s06 ab, während sich die zweite Fördereinrichtung 07 entlang des zweiten Förderweges s07 weiter bewegt. Nun positioniert die zweite Fördereinrichtung 07 an der Übergabeposition der Übergabeeinrichtung 08 in dem von der zweiten Fördereinrichtung 07 durchlaufenen zweiten Förderweg s07 ein drittes Objekt 04, wobei die erste Handhabungseinrichtung 09 dieses in dem von der zweiten Fördereinrichtung 07 durchlaufenen zweiten Förderweg s07 positionierte dritte Objekt 04 ergreift und in Richtung des von der ersten Fördereinrichtung 06 durchlaufenen ersten Förderweges s06 bewegt. Die erste Handhabungseinrichtung 09 legt das von ihr an der Übergabeposition in dem von der zweiten Fördereinrichtung 07 durchlaufenen zweiten Förderweg s07 ergriffene dritte Objekt 04 an einem freien Platz der ersten Fördereinrichtung 06 in dem von der ersten Fördereinrichtung 06 durchlaufenen ersten Förderweg s06 ab, während sich die zweite Handhabungseinrichtung 09 in ihre Ruhestellung unterhalb des von der ersten Fördereinrichtung 06 durchlaufenen ersten Förderweges s06 bewegt. Schließlich bewegt sich die erste Handhabungseinrichtung 09 in ihre Ruhestellung unterhalb des von der ersten Fördereinrichtung 06 durchlaufenen ersten Förderweges s06. Damit kann der beschriebene Bewegungszyklus von vorne durchlaufen werden. Das vorgeschlagene Verfahren sieht demnach vor, dass ein erstes der entlang des ersten Förderweges s06 transportierten Objekte 04 von der ersten Handhabungseinrichtung 09 der Übergabeeinrichtung 08 ergriffen und im zweiten Förderweg s07 der zweiten Fördereinrichtung 07 positioniert wird, während ein zweites der entlang des zweiten Förderweges s07 transportierten Objekte 04 von der zweiten Handhabungseinrichtung 09 der Übergabeeinrichtung 08 ergriffen und im ersten Förderweg s06 der ersten Fördereinrichtung 06 abgelegt wird. Die jeweilige Bewegung der beiden Handhabungseinrichtungen 09 ist jeweils darauf ausgerichtet, die Übergabeposition der Übergabeeinrichtung 08 in dem von der zweiten Fördereinrichtung 07 durchlaufenen zweiten Förderweg s07 zu erreichen, weshalb die beiden Handhabungseinrichtungen 09 gemeinsam relativ zu der Übergabeposition der Übergabeeinrichtung 08 verfahren werden. Die beiden Handhabungseinrichtungen 09 führen in einer z. B. orthogonal zum ersten Förderweg s06 und zum zweiten Förderweg s07 stehenden Ebene jeweils eine zweidimensionale, vorzugsweise jeweils linear geführte Bewegung aus.
Vorrichtungsmäßig ergibt sich eine Transportvorrichtung 03 für in einer Bearbeitungsmaschine 01 zu bearbeitende und/oder dort bearbeitete Objekte 04, mit einer ersten Fördereinrichtung 06 und einer zweiten Fördereinrichtung 07, wobei für diese Objekte 04 hinsichtlich der ersten Fördereinrichtung 06 ein erster Förderweg s06 und hinsichtlich der zweiten Fördereinrichtung 07 ein zweiter Förderweg s07 jeweils starr vorgegeben sind, wobei eine im zweiten Förderweg s07 der zweiten Fördereinrichtung 07 angeordnete Übergabeposition einer Übergabeeinrichtung 08 zur Übergabe von Objekten 04 von der ersten Fördereinrichtung 06 an die zweite Fördereinrichtung 07 und/oder von der zweiten Fördereinrichtung 07 an die erste Fördereinrichtung 06 vorgesehen ist, wobei die zweite Fördereinrichtung 07 mindestens eine vorzugsweise steuerbare Halteeinrichtung 11 zum Halten von jeweils einem der entlang des zweiten Förderweges s07 zu transportierenden Objekte 04 aufweist, wobei von der ersten Fördereinrichtung 06 entlang des ersten Förderweges s06 bewegte Objekte 04 kontinuierlich bewegt sind und die mindestens eine Halteeinrichtung 11 der zweiten Fördereinrichtung 07 entlang des zweiten Förderweges s07 diskontinuierlich, d. h. in einem vorzugsweise einstellbaren Takt bewegt ist, wobei die zu transportierenden Objekte 04 jeweils als ein jeweils eine Längsachse I04 aufweisender Hohlkörper ausgebildet sind, wobei die jeweilige Längsachse I04 der zu transportierenden Objekte 04 im ersten Förderweg s06 und im zweiten Förderweg s07 jeweils liegend angeordnet ist. Dabei sind der erste Förderweg s06 der ersten Fördereinrichtung 06 erfindungsgemäß linear und der zweite Förderweg s07 der zweiten Fördereinrichtung 07 als ein in sich geschlossener Umlauf ausgebildet. Der erste Förderweg s06 ist in einem die Übergabeposition aufweisenden Aktionsbereich B der Übergabeeinrichtung 08 erfindungsgemäß tangential zum zweiten Förderweg s07 angeordnet. Der erste Förderweg s06 der ersten Fördereinrichtung 06 und der zweite Förderweg s07 der zweiten Fördereinrichtung 07 sind zumindest im Aktionsbereich B der Übergabeeinrichtung 08 in zwei verschiedenen Ebenen E06; E07 angeordnet, wobei diese beiden Ebenen E06; E07 zumindest in dem die Übergabeposition aufweisenden Aktionsbereich B der Übergabeeinrichtung 08 einen von Null verschiedenen Abstand a voneinander aufweisen. Die beiden Ebenen E06; E07 sind vorzugsweise parallel zueinander angeordnet. Die Förderwege s06; s07 sind zumindest im Aktionsbereich B der Übergabeeinrichtung 08 vertikal übereinander angeordnet. Jeweils mit Bezug auf die bewegten Objekte 04 sind eine Transportrichtung T der ersten Fördereinrichtung 06 und eine Transportrichtung T der zweiten Fördereinrichtung 07 vorzugsweise gegenläufig zueinander ausgebildet. Die Übergabeeinrichtung 08 weist mindestens eine Handhabungseinrichtung 09 oder genau zwei Handhabungseinrichtungen 09 auf. Die Übergabeeinrichtung 08 ist in der bevorzugten Ausführung die Objekte 04 jeweils einzeln von der ersten Fördereinrichtung 06 an die zweite Fördereinrichtung 07 und/oder von der zweiten Fördereinrichtung 07 an die erste Fördereinrichtung 06 übergebend ausgebildet. Der Aktionsbereich B der Übergabeeinrichtung 08 ist durch einen Wirkungsbereich oder eine Griffweite der mindestens einen zur Übergabeeinrichtung 08 gehörenden Handhabungseinrichtung 09 bestimmt. Die in der Bearbeitungsmaschine 01 nacheinander zu bearbeitenden Objekte 04 sind bei ihrem Transport zur Übergabeeinrichtung 08 entlang des ersten Förderweges s06 der ersten Fördereinrichtung 06 z. B. jeweils voneinander beabstandet ohne zueinander einen Berührungskontakt aufweisend angeordnet. Die erste Fördereinrichtung 06 weist insbesondere mehrere jeweils in einer Reihe hintereinander jeweils in einem Abstand k04 angeordnete Mitnehmer 12 auf, wobei mit jedem Mitnehmer 12 jeweils eines der Objekte 04 transportiert oder zumindest transportierbar ist, wobei jeder dieser Mitnehmer 12 jeweils ein einzelnes Exemplar dieser Objekte 04 liegend aufnimmt. Die betreffende Handhabungseinrichtung 09 ist ein an der Übergabeposition im zweiten Förderweg s07 der zweiten Fördereinrichtung 07 ergriffenes Objekt 04 an einem freien Platz der ersten Fördereinrichtung 06 ablegend ausgebildet. Die Halteeinrichtung 11 ist z. B. als eine einseitig oder mehrseitig an das in der Bearbeitungsmaschine 01 zu bearbeitende Objekt 04 angreifende Greifeinrichtung 11 ausgebildet und/oder die Halteeinrichtung 11 weist eine Klemmeinrichtung auf oder ist als eine solche ausgebildet, wobei das betreffende in der Bearbeitungsmaschine 01 zu bearbeitende Objekt 04 jeweils mit seinen jeweiligen Stirnseiten zwischen zwei sich gegenüber stehenden Elementen der betreffenden Klemmeinrichtung geklemmt ist. Die erste Fördereinrichtung 06 weist sowohl eine der Bearbeitungsmaschine 01 vorgeordnete Aufnahmestation 19 zur Aufnahme von in der Bearbeitungsmaschine 01 zu bearbeitenden Objekten 04 als auch eine der Bearbeitungsmaschine 01 nachgeordnete Entnahmestation 22 zur Entnahme von bereits in der Bearbeitungsmaschine 01 bearbeiteten Objekten 04 auf. Die Bearbeitungsmaschine 01 weist vorzugsweise mehrere Bearbeitungsstationen 02 zur Bearbeitung der transportierten Objekte 04 auf, wobei mindestens eine dieser Bearbeitungsstationen 02 als ein Druckwerk ausgebildet ist. Dabei ist das Druckwerk vorzugsweise als ein in einem Siebdruckverfahren oder in einem Inkjet-Druckverfahren druckendes Druckwerk ausgebildet. Beide Handhabungseinrichtungen 09 sind in der bevorzugten Ausführung an einem selben Träger 16 angeordnet, wobei der Träger 16 entlang eines Verfahrweges verfahrbar ist, wobei die beiden Handhabungseinrichtungen 09 entlang des Verfahrweges des Trägers 16 gemeinsam verfahrbar sind. Dabei ist der Verfahrweg des Trägers 16 parallel zum ersten Förderweg s06 der ersten Fördereinrichtung 06 gerichtet. Der Träger 16 ist unabhängig von einer jeweiligen Bewegung von zumindest einer der beiden Handhabungseinrichtungen 09 entlang seines Verfahrweges verfahren oder zumindest verfahrbar. Die jeweiligen Bewegungen der an dem Träger 16 angeordneten Handhabungseinrichtungen 09 sind unabhängig voneinander ausgeführt oder zumindest ausführbar. Der Träger 16 ist in dem zur Übergabeeinrichtung 08 gehörenden Aktionsbereich B angeordnet und wird innerhalb dieses Aktionsbereiches B bidirektional verfahren oder ist zumindest fahrbar, wobei der vom Träger 16 innerhalb des Aktionsbereiches B ausführbare Verfahrweg beidseitig begrenzt ist. Die beiden Handhabungseinrichtungen 09 sind z. B. jeweils an einer Führungsschiene 14 angeordnet. Die von der ersten Fördereinrichtung 06 entlang des ersten Förderweges s06 ausgeführte Bewegung der Objekte 04 und die von der zweiten Fördereinrichtung 07 entlang des zweiten Förderweges s07 ausgeführte Bewegung der Objekte 04 sind von einer vorzugsweise elektronischen Steuereinheit sowohl miteinander synchronisiert als auch jeweils mit der jeweiligen Bewegung der mindestens einen Handhabungseinrichtung 09 und mit der jeweiligen Bewegung der mindestens einen vorzugsweise steuerbaren Halteeinrichtung 11 jeweils zur Übergabe von mindestens einem der in der Bearbeitungsmaschine 01 zu bearbeitenden oder dort bearbeiteten Objekte 04 aufeinander abgestimmt und/oder miteinander synchronisiert. Weitere Ausgestaltungen und Weiterbildungen dieser Transportvorrichtung ergeben sich in Verbindung mit den zuvor beschriebenen Merkmalen.

### Bezugszeichenliste

- 01: Bearbeitungsmaschine
- 02: Bearbeitungsstation
- 03: Transportvorrichtung

- 04: Objekt
- 05: -
- 06: Fördereinrichtung, erste
- 07: Fördereinrichtung, zweite
- 08: Übergabeeinrichtung
- 09: Handhabungseinrichtung; Hubeinrichtung
- 10: -
- 11: Halteeinrichtung; Greifeinrichtung
- 12: Mitnehmer
- 13: Antrieb
- 14: Führungsschiene
- 15: -
- 16: Träger; Rahmen
- 17: Trocknungssystem
- 18: Druckbildkontrolleinrichtung
- 19: Aufnahmestation
- 20: -
- 21: Reinigungseinrichtung
- 22: Entnahmestation
- 23: Vereinzelungsvorrichtung
- a: Abstand
- B: Aktionsbereich
- C: Abschnitt
- D: Abschnitt
- E06: Ebene, erste
- E07: Ebene, zweite
- I04: Längsachse
- k04: Abstand
- s06: Förderweg, erster
- s07: Förderweg, zweiter
- T: Transportrichtung

## Patentansprüche

1. Transportvorrichtung (03) für in einer Bearbeitungsmaschine (01) zu bearbeitende und dort bearbeitete Objekte (04), mit einer ersten Fördereinrichtung (06) und einer zweiten Fördereinrichtung (07), wobei für diese Objekte (04) hinsichtlich der ersten Fördereinrichtung (06) ein erster Förderweg (s06) und hinsichtlich der zweiten Fördereinrichtung (07) ein zweiter Förderweg (s07) jeweils starr vorgegeben sind, wobei eine im zweiten Förderweg (s07) der zweiten Fördereinrichtung (07) angeordnete Übergabeposition einer Übergabeeinrichtung (08) zur Übergabe von Objekten (04) von der ersten Fördereinrichtung (06) an die zweite Fördereinrichtung (07) und von der zweiten Fördereinrichtung (07) an die erste Fördereinrichtung (06) vorgesehen ist, wobei die zweite Fördereinrichtung (07) eine Halteeinrichtung (11) zum Halten von jeweils einem der entlang des zweiten Förderweges (s07) zu transportierenden Objekte (04) aufweist, wobei von der ersten Fördereinrichtung (06) entlang des ersten Förderweges (s06) bewegte Objekte (04) kontinuierlich bewegt sind und die Halteeinrichtung (11) der zweiten Fördereinrichtung (07) entlang des zweiten Förderweges (s07) diskontinuierlich bewegt ist, wobei der erste Förderweg (s06) der ersten Fördereinrichtung (06) linear und der zweite Förderweg (s07) der zweiten Fördereinrichtung (07) als ein in sich geschlossener Umlauf ausgebildet sind, wobei die zu transportierenden Objekte (04) jeweils als ein jeweils eine Längsachse (I04) aufweisender Hohlkörper ausgebildet sind, **dadurch gekennzeichnet, dass** die jeweilige Längsachse (I04) der zu transportierenden Objekte (04) im ersten Förderweg (s06) und im zweiten Förderweg (s07) jeweils liegend angeordnet ist, wobei der erste Förderweg (s06) in einem die Übergabeposition aufweisenden Aktionsbereich (B) der Übergabeeinrichtung (08) tangential zum zweiten Förderweg (s07) angeordnet ist, wobei der erste Förderweg (s06) der ersten Fördereinrichtung (06) und der zweite Förderweg (s07) der zweiten Fördereinrichtung (07) zumindest im Aktionsbereich (B) der Übergabeeinrichtung (08) in zwei verschiedenen Ebenen (E06; E07) angeordnet sind, wobei diese beiden Ebenen (E06; E07) zumindest in dem die Übergabeposition aufweisenden Aktionsbereich (B) der Übergabeeinrichtung (08) einen von Null verschiedenen Abstand (a) voneinander aufweisen, wobei die erste Fördereinrichtung (06) sowohl eine der Bearbeitungsmaschine (01) vorgeordnete Aufnahmestation (19) zur Aufnahme von in der Bearbeitungsmaschine (01) zu bearbeitenden Objekten (04) als auch eine der Bearbeitungsmaschine (01) nachgeordnete Entnahmestation (22) zur Entnahme von bereits in der Bearbeitungsmaschine (01) bearbeiteten Objekten (04) aufweist.

2. Transportvorrichtung (03) nach Anspruch 1, **dadurch gekennzeichnet, dass** die beiden Ebenen (E06; E07) parallel zueinander angeordnet sind.

3. Transportvorrichtung (03) nach Anspruch 1 oder 2, **dadurch gekennzeichnet, dass** die Förderwege (s06; s07) zumindest im Aktionsbereich (B) der Übergabeeinrichtung (08) vertikal übereinander angeordnet sind.

4. Transportvorrichtung (03) nach Anspruch 1 oder 2 oder 3, **dadurch gekennzeichnet, dass** die Übergabeeinrichtung (08) mindestens eine Handhabungseinrichtung (09) oder genau zwei Handhabungseinrichtungen (09) aufweist.

5. Transportvorrichtung (03) nach Anspruch 1 oder 2 oder 3 oder 4, **dadurch gekennzeichnet, dass** die Übergabeeinrichtung (08) die Objekte (04) jeweils einzeln von der ersten Fördereinrichtung (06) an die zweite Fördereinrichtung (07) und/oder von der zweiten Fördereinrichtung (07) an die erste Fördereinrichtung (06) übergebend ausgebildet ist.

6. Transportvorrichtung (03) nach Anspruch 1 oder 2 oder 3 oder 4 oder 5, **dadurch gekennzeichnet, dass** der Aktionsbereich (B) der Übergabeeinrichtung (08) durch einen Wirkungsbereich oder eine Griffweite der mindestens einen zur Übergabeeinrichtung (08) gehörenden Handhabungseinrichtung (09) bestimmt ist.

7. Transportvorrichtung (03) nach Anspruch 1 oder 2 oder 3 oder 4 oder 5 oder 6, **dadurch gekennzeichnet, dass** die in der Bearbeitungsmaschine (01) nacheinander zu bearbeitenden Objekte (04) bei ihrem Transport zur Übergabeeinrichtung (08) entlang des ersten Förderweges (s06) der ersten Fördereinrichtung (06) jeweils voneinander beabstandet ohne zueinander einen Berührungskontakt aufweisend angeordnet sind.

8. Transportvorrichtung (03) nach Anspruch 4 oder 5 oder 6 oder 7, **dadurch gekennzeichnet, dass** die betreffende Handhabungseinrichtung (09) ein an der Übergabeposition im zweiten Förderweg (s07) der zweiten Fördereinrichtung (07) ergriffenes Objekt (04) an einen freien Platz der ersten Fördereinrichtung (06) ablegend ausgebildet ist.

9. Transportvorrichtung (03) nach Anspruch 1 oder 2 oder 3 oder 4 oder 5 oder 6 oder 7 oder 8, **dadurch gekennzeichnet, dass** die Bearbeitungsmaschine (01) mehrere Bearbeitungsstationen (02) zur Bearbeitung der transportierten Objekte (04) aufweist, wobei mindestens eine dieser Bearbeitungsstationen (02) als ein Druckwerk ausgebildet ist.

10. Transportvorrichtung (03) nach Anspruch 9, **dadurch gekennzeichnet, dass** das Druckwerk als ein in einem Siebdruckverfahren oder in einem Inkjet-Druckverfahren druckendes Druckwerk ausgebildet ist.

11. Transportvorrichtung (03) nach Anspruch 4 oder 5 oder 6 oder 7 oder 8 oder 9 oder 10, **dadurch gekennzeichnet, dass** beide Handhabungseinrichtungen (09) an einem selben Träger (16) und/oder jeweils an einer Führungsschiene (14) angeordnet sind, wobei der Träger (16) entlang eines Verfahrweges verfahrbar ist, wobei die beiden Handhabungseinrichtungen (09) entlang des Verfahrweges des Trägers (16) gemeinsam verfahrbar sind.

12. Transportvorrichtung (03) nach Anspruch 11, **dadurch gekennzeichnet, dass** der Verfahrweg des Trägers (16) parallel zum ersten Förderweg (s06) der ersten Fördereinrichtung (06) gerichtet ist.

13. Transportvorrichtung (03) nach Anspruch 11 oder 12, **dadurch gekennzeichnet, dass** der Träger (16) unabhängig von einer jeweiligen Bewegung von zumindest einer der beiden Handhabungseinrichtungen (09) entlang seines Verfahrweges verfahren oder zumindest verfahrbar ist und/oder dass der Träger (16) in dem zur Übergabeeinrichtung (08) gehörenden Aktionsbereich (B) angeordnet und innerhalb dieses Aktionsbereiches (B) bidirektional verfahren oder zumindest fahrbar ist, wobei der vom Träger (16) innerhalb des Aktionsbereiches (B) ausführbare Verfahrweg beidseitig begrenzt ist.

14. Transportvorrichtung (03) nach Anspruch 11 oder 12 oder 13, **dadurch gekennzeichnet, dass** die jeweiligen Bewegungen der an dem Träger (16) angeordneten Handhabungseinrichtungen (09) unabhängig voneinander ausgeführt oder zumindest ausführbar sind.

15. Transportvorrichtung (03) nach Anspruch 1 oder 2 oder 3 oder 4 oder 5 oder 6 oder 7 oder 8 oder 9 oder 10 oder 11 oder 12 oder 13 oder 14, **dadurch gekennzeichnet, dass** die Halteeinrichtung (11) als eine einseitig oder mehrseitig an das in der Bearbeitungsmaschine (01) zu bearbeitende Objekt (04) angreifende Greifeinrichtung (11) ausgebildet ist, wobei ein von der Greifeinrichtung (11) der zweiten Fördereinrichtung (07) ergriffenes Objekt (04) mit seiner Längsachse (I04) in der zweiten Ebene (E07) liegend und/oder orthogonal zum zweiten Förderweg (s07) gerichtet ist, und/oder dass die Halteeinrichtung (11) eine Klemmeinrichtung aufweist oder als eine solche ausgebildet ist, wobei das betreffende in der Bearbeitungsmaschine (01) zu bearbeitende Objekt (04) jeweils mit seinen jeweiligen Stirnseiten zwischen zwei sich gegenüber stehenden Elementen der betreffenden Klemmeinrichtung geklemmt ist.

16. Transportvorrichtung (03) nach Anspruch 1 oder 2 oder 3 oder 4 oder 5 oder 6 oder 7 oder 8 oder 9 oder 10 oder 11 oder 12 oder 13 oder 14 oder 15, **dadurch gekennzeichnet, dass** die von der ersten Fördereinrichtung (06) entlang des ersten Förderweges (s06) ausgeführte Bewegung der Objekte (04) und die von der zweiten Fördereinrichtung (07) entlang des zweiten Förderweges (s07) ausgeführte Bewegung der Objekte (04) von einer Steuereinheit sowohl miteinander synchronisiert als auch jeweils mit der jeweiligen Bewegung der mindestens einen Handhabungseinrichtung (09) und mit der jeweiligen Bewegung der Halteeinrichtung (11) jeweils zur Übergabe von mindestens einem der in der Bearbeitungsmaschine (01) zu bearbeitenden oder dort bearbeiteten Objekte (04) aufeinander abgestimmt und/oder miteinander synchronisiert sind.

## Claims

1. Transport device (03) for objects (04) to be processed in a processing machine (01) and processed there, having a first conveyor device (06) and a second conveyor device (07), wherein for these objects (04) with respect to the first conveyor device (06) a first conveyor path (s06) and with respect to the second conveyor device (07) a second conveyor path (s07) is in each case rigidly predefined, wherein a transfer position of a transfer device (08) arranged in the second conveyor path (s07) for transferring objects (04) from the first conveyor device (06) to the second conveyor device (07) and from the second conveyor device (07) to the first conveyor device (06) is provided, wherein the second conveyor device (07) has a holding device (11) for holding in each case one of the objects (04) to be transported along the second conveyor path (s07), wherein objects (04) are moved continuously from the first conveying device (06) along the first conveyor path (s06) and the holding device (11) of the second conveying device (07) is discontinuously moved along the second conveyor path (s07), wherein the first conveyor path (s06) of the first conveyor device (06) is configured linearly and the second conveyor path (s07) of the second conveyor device (07) is configured as a self-contained revolution, wherein the objects (04) to be transported in each case are configured as hollow bodies in each case having a longitudinal axis (104), **characterized in that** the respective longitudinal axis (104) of the objects (04) to be transported lies in the first conveyor path (s06) and in the second conveyor path (s07) in each case, wherein the first conveyor path (s06) is arranged tangentially to the second conveyor path (s07) in an action region (B) having the first transfer position of the transfer device (08), wherein the first conveyor path (s06) of the first conveyor device (06) and the second conveyor path (s07) of the second conveyor device (07) are arranged on two different planes (E06; E07) at least in the action region (B) of the transfer device (08), wherein these two planes (E06; E07) at least in the action region (B) of the transfer device (08) having the transfer position have a distance (a) differing from zero from each other, wherein the first conveyor device (06) has a receiving station (19) arranged upstream of the processing machine (01) for receiving the objects (04) to be processed in the processing machine (01) and a removal station (22) arranged downstream of the processing machine (01) for removal of objects (04) that have already been processed in the processing machine (01).

2. The transport device (03) according to claim 1, **characterized in that** the two planes (E06; E07) are arranged parallel to each other.

3. The transport device (03) according to claim 1 or 2, **characterized in that** the conveyor paths (s06; s07) are arranged vertically one above the other at least in the action region (B) of the transfer device (08).

4. The transport device (03) according to claim 1 or 2 or 3, **characterized in that** the transfer device (08) has at least one handling device (09) or precisely two handling devices (09).

5. The transport device (03) according to claim 1 or 2 or 3 or 4, **characterized in that** the transfer device (08) is configured to transfer the objects (04) in each case individually from the first conveyor device (06) to the second conveyor device (07) and/or from the second conveyor device (07) to the first conveyor device (06).

6. The transport device (03) according to claim 1 or 2 or 3 or 4 or 5, **characterized in that** the action region (B) of the transfer device (08) is determined by an active region or a grip of the at least one handling device (09) belonging to the transfer device (08).

7. The transport device (03) according to claim 1 or 2 or 3 or 4 or 5 or 6, **characterized in that** the objects (04) to be processed in sequence in the processing machine (01) in their transport to the transfer device (08) along the first conveyor path (s06) of the first conveyor device (06) are in each case arranged spaced apart from one another without having physical contact to one another.

8. The transport device (03) according to claim 4 or 5 or 6 or 7, **characterized in that** the relevant handling device (09) is configured depositing an object (04) gripped on the transfer position in the second conveyor path (s07) of the second conveyor device (07) to a free place of the first conveyor device (06).

9. The transport device (03) according to claim 1 or 2 or 3 or 4 or 5 or 6 or 7 or 8, **characterized in that** the processing machine (01) has several processing stations (02) for processing the transported objects (04), wherein at least one of these processing stations (02) is configured as a printing unit.

10. The transport device (03) according to claim 9, **characterized in that** the printing unit is configured as a printing unit printing in a screen printing method or in an inkjet printing method.

11. The transport device (03) according to claim 4 or 5 or 6 or 7 or 8 or 9 or 10, **characterized in that** both handling devices (09) are arranged on a same carrier (16) and/or in each case on a guide rail (14), wherein the carrier (16) can be moved along a movement path, wherein the two handling devices (09) are jointly movable along the movement path of the carrier (16).

12. The transport device (03) according to claim 11, **characterized in that** the movement path of the carrier (16) is aligned parallel to the first conveyor path (s06) of the first conveyor device (06).

13. The transport device (03) according to claim 11 or 12, **characterized in that** the carrier (16) is moved or at least can be moved along its movement path independently from a respective movement of at least one of the two handling devices (09) and/or that the carrier (16) is arranged in the action region (B) belonging to the transfer device (08) and is moved or at least can be moved bidirectionally within this action region (B), wherein the movement path executable by the carrier (16) within the action region (B) is limited/restricted on both sides.

14. The transport device (03) according to claim 11 or 12 or 13, **characterized in that** the respective movements of the handling devices (09) arranged on the carrier (16) are executed or at least can be executed independently from one another.

15. The transport device (03) according to claim 1 or 2 or 3 or 4 or 5 or 6 or 7 or 8 or 9 or 10 or 11 or 12 or 13 or 14, **characterized in that** the holding device (11) is configured as a gripper device (11) gripping the object (04) to be processed in the processing machine (01) on one side or on multiple sides, wherein an object (04) gripped by the gripper device (11) of the second conveyor device (07) is aligned with its longitudinal axis (I04) lying on the second plane (E07) and/or orthogonally to the second conveyor path (s07), and/or that the holding device (11) has a clamping device or is configured as such, wherein the relevant object (04) to be processed in the processing machine (01) in each case is clamped with its respective front sides between two opposing elements of the relevant clamping device.

16. The transport device (03) according to claim 1 or 2 or 3 or 4 or 5 or 6 or 7 or 8 or 9 or 10 or 11 or 12 or 13 or 14 or 15, **characterized in that** the movement of the objects (04) executed from the first conveying device (06) along the first conveyor path (s06) and the movement of the objects (04) executed from the second conveyor device (07) along the second conveyor path (s07) are synchronized by a control unit both with each other as well as in each case coordinated with the respective movement of the at least one handling device (09) and with the respective movement of the holding device (11) in each case for transferring at least one of the objects (04) to be processed in the processing machine (01) or processed there and/or are synchronized with one another.

## Revendications

1. Dispositif de transport (03) pour des objets (04) à usiner dans une machine d'usinage (01) et usinés dans celle-ci, comprenant un premier système de transport (06) et un deuxième système de transport (07), dans lequel, en ce qui concerne le premier système de transport (06), une première voie de transport (s06), et en ce qui concerne le deuxième système de transport (07), une deuxième voie de transport (s07) sont respectivement prédéfinies fixement pour ces objets (04), dans lequel une position de transfert d'un système de transfert (08) située dans la deuxième voie de transport (s07) du deuxième système de transport (07) est destinée à transférer les objets (04) du premier système de transport (06) sur le deuxième système de transport (07) et du deuxième système de transport (07) sur le premier système de transport (06), dans lequel le deuxième système de transport (07) présente un système de retenue (11) destiné à retenir respectivement un des objets (04) à transporter le long de la deuxième voie de transport (s07), dans lequel les objets (04) déplacés par le premier système de transport (06) le long de la première voie de transport (s06) sont déplacés en continu et le système de retenue (11) du deuxième système de transport (07) est déplacé en discontinu le long de la deuxième voie de transport (s07), dans lequel la première voie de transport (s06) du premier système de transport (06) est linéaire et la deuxième voie de transport (s07) du deuxième système de transport (07) est réalisée sous la forme d'une circulation fermée sur elle-même, dans lequel les objets (04) à transporter sont réalisés chacun sous la forme d'un corps creux présentant chacun un axe longitudinal (I04), **caractérisé en ce que** l'axe longitudinal (I04) respectif des objets (04) à transporter est agencé de manière à se situer respectivement dans la première voie de transport (s06) et dans la deuxième voie de transport (s07), dans lequel la première voie de transport (s06) est située dans une zone d'action (B) du système de transfert (08), laquelle zone présente la position de transfert, de manière tangentielle par rapport à la deuxième voie de transport (s07), dans lequel la première voie de transport (s06) du premier système de transport (06) et la deuxième voie de transport (s07) du deuxième système de transport (07) sont situées au moins dans la zone d'action (B) du système de transfert (08) dans deux plans (E06 ; E07) différents, dans lequel ces deux plans (E06 ; E07) présentent au moins dans la zone d'action (B) du système de transfert (08), laquelle zone présente la position de transfert, un écart (a) l'un par rapport à l'autre différent de zéro, dans lequel le premier système de transport (06) présente aussi bien une station de réception (19) située en amont de la machine d'usinage (01) et destinée à usiner des objets (04) à transporter dans la machine d'usinage (01) qu'une station de prélèvement (22) située en aval de la machine d'usinage (01) et destinée à prélever des objets (04) déjà usinés dans la machine d'usinage (01).

2. Dispositif de transport (03) selon la revendication 1, **caractérisé en ce que** les deux plans (E06 ; E07) sont agencés parallèlement l'un à l'autre.

3. Dispositif de transport (03) selon la revendication 1 ou 2, **caractérisé en ce que** les voies de transport (s06 ; s07) sont situées verticalement les unes au-dessus des autres au moins dans la zone d'action (B) du système de transfert (08).

4. Dispositif de transport (03) selon la revendication 1 ou 2 ou 3, **caractérisé en ce que** le système de transfert (08) comprend au moins un système de manipulation (09) ou exactement deux systèmes de manipulation (09).

5. Dispositif de transport (03) selon la revendication 1 ou 2 ou 3 ou 4, **caractérisé en ce que** le système de transfert (08) est conçu pour transférer les objets (04) respectivement individuellement du premier système de transport (06) sur le deuxième système de transport (07) et/ou du deuxième système de transport (07) sur le premier système de transport (06).

6. Dispositif de transport (03) selon la revendication 1 ou 2 ou 3 ou 4 ou 5, **caractérisé en ce que** la zone d'action (B) du système de transfert (08) est définie par une zone d'effet ou une largeur de préhension du au moins un système de manipulation (09) faisant partie du système de transfert (08).

7. Dispositif de transport (03) selon la revendication 1 ou 2 ou 3 ou 4 ou 5 ou 6, **caractérisé en ce que** les objets (04) à usiner successivement dans la machine d'usinage (01), lors de leur transport vers le système de transfert (08) le long de la première voie de transport (s06), sont agencés du premier système de transport (06) respectivement à distance les uns des autres sans être en contact les uns avec les autres.

8. Dispositif de transport (03) selon la revendication 4 ou 5 ou 6 ou 7, **caractérisé en ce que** le système de manipulation (09) concerné est conçu pour déposer un objet (04) saisi dans la position de transfert dans la deuxième voie de transport (s07) du deuxième système de transport (07) sur un emplacement libre du premier système de transport (06).

9. Dispositif de transport (03) selon la revendication 1 ou 2 ou 3 ou 4 ou 5 ou 6 ou 7 ou 8, **caractérisé en ce que** la machine d'usinage (01) comprend plusieurs stations d'usinage (02) pour l'usinage des objets (04) transportés, dans lequel au moins une de ces stations d'usinage (02) est réalisée sous la forme d'un groupe d'impression.

10. Dispositif de transport (03) selon la revendication 9, **caractérisé en ce que** le groupe d'impression est réalisé sous la forme d'un groupe d'impression réalisant une impression au cours d'un procédé de sérigraphie ou au cours d'un procédé d'impression à jet d'encre.

11. Dispositif de transport (03) selon la revendication 4 ou 5 ou 6 ou 7 ou 8 ou 9 ou 10, **caractérisé en ce que** les deux systèmes de manipulation (09) sont agencés sur un même support (16) et/ou chacun sur un rail de guidage (14),
dans lequel le support (16) est mobile le long d'une voie de déplacement, dans lequel les deux systèmes de manipulation (09) sont mobiles conjointement le long de la voie de déplacement du support (16).

12. Dispositif de transport (03) selon la revendication 11, **caractérisé en ce que** la voie de déplacement du support (16) est orientée parallèlement à la première voie de transport (s06) du premier système de transport (06).

13. Dispositif de transport (03) selon la revendication 11 ou 12, **caractérisé en ce que** le support (16) est déplacé ou tout du moins peut être déplacé le long de sa voie de déplacement indépendamment d'un déplacement respectif d'au moins un des deux systèmes de manipulation (09) et/ou **en ce que** le support (16) est agencé dans la zone d'action (B) faisant partie du système de transfert (08) et est déplacé ou peut tout du moins être déplacé de manière bidirectionnelle à l'intérieur de cette zone d'action (B), dans lequel la voie de déplacement pouvant être parcourue par le support (16) à l'intérieur de la zone d'action (B) est délimitée des deux côtés.

14. Dispositif de transport (03) selon la revendication 11 ou 12 ou 13, **caractérisé en ce que** les mouvements respectifs des systèmes de manipulation (09) agencés sur le support (16) sont exécutés ou tout du moins peuvent être exécutés indépendamment les uns des autres.

15. Dispositif de transport (03) selon la revendication 1 ou 2 ou 3 ou 4 ou 5 ou 6 ou 7 ou 8 ou 9 ou 10 ou 11 ou 12 ou 13 ou 14, **caractérisé en ce que** le système de retenue (11) est réalisé sous la forme d'un système de préhension (11) agissant sur un côté ou sur plusieurs côtés de l'objet (04) à usiner dans la machine d'usinage (01), dans lequel un objet (04) saisi par le système de préhension (11) du deuxième système de transport (07) est orienté de manière à se situer avec son axe longitudinal (I04) dans le deuxième plan (E07) et/ou perpendiculairement à la deuxième voie de transport (s07), et/ou **en ce que** le système de retenue (11) présente un système de serrage ou est réalisé sous la forme d'un tel système, dans lequel l'objet (04) concerné à usiner dans la machine d'usinage (01) est serré respectivement par ses faces frontales respectives entre deux éléments opposés du système de serrage concerné.

16. Dispositif de transport (03) selon la revendication 1 ou 2 ou 3 ou 4 ou 5 ou 6 ou 7 ou 8 ou 9 ou 10 ou 11 ou 12 ou 13 ou 14 ou 15, **caractérisé en ce que** le mouvement des objets (04) effectué par le premier système de transport (06) le long de la première voie de transport (s06) et le mouvement des objets (04) effectué par le deuxième système de transport (07) le long de la deuxième voie de transport (s07) sont adaptés l'un à l'autre et/ou synchronisés l'un avec l'autre aussi bien de manière synchronisée l'un avec l'autre que respectivement avec le mouvement respectif du au moins un système de manipulation (09) et avec le mouvement respectif du système de retenue (11) dans chaque cas pour transférer au moins l'un des objets (04) à usiner dans la machine d'usinage (01) ou usinés dans celle-ci.
